# EUROPÄISCHE PATENTSCHRIFT

(11) **EP 3 704 473 B1**
(45) Veröffentlichungstag und Bekanntmachung des Hinweises auf die Patenterteilung: **24.12.2025**
(21) Anmeldenummer: 18796914.2
(22) Anmeldetag: 31.10.2018
(51) Int. Cl.: G01J 3/44, G01N 21/65, G01J 3/02

(54) **NEUARTIGER SENSOR FÜR DIE RAMANSPEKTROSKOPIE**
NOVEL SENSOR FOR RAMAN SPECTROSCOPY
CAPTEUR NOVATEUR POUR SPECTROSCOPIE RAMAN

(30) Priorität: 02.11.2017 DE 102017125637
(43) Veröffentlichungstag der Anmeldung: 09.09.2020
(73) Patentinhaber: Hochschule Mannheim, 68163 Mannheim (DE)
(72) Erfinder: HIEN, Andreas, 71332 Waiblingen (DE); BRAUN, Frank, 69226 Nußloch (DE); RÄDLE, Matthias, 67273 Weisenheim/Berg (DE)
(74) Vertreter: Blumbach · Zinngrebe Patentanwälte PartG mbB
(86) Internationale Anmeldenummer: PCT/EP2018/079899
(87) Internationale Veröffentlichungsnummer: WO 2019/086552

(56) Entgegenhaltungen:
- EP-A2- 0 552 820
- WO-A1-2009/101659
- DE-A1- 102016 003 334
- JP-A- H10 267 846
- US-A- 6 038 363
- US-A1- 2004 204 634
- US-A1- 2005 248 758
- US-A1- 2008 180 663
- US-B1- 7 385 692
- MOHR CHRISTIAN ET AL: "Inexpensive Raman Spectrometer for Undergraduate and Graduate Experiments and Research", JOURNAL OF CHEMICAL EDUCATION, vol. 87, no. 3, 1 March 2010 (2010-03-01), US, pages 326 - 330, XP055959327, ISSN: 0021-9584, DOI: 10.1021/ed800081t
- MOHR CHRISTIAN ET AL: "Inexpensive Raman Spectrometer for Undergraduate and Graduate Experiments and Research - Supplementary Material", JOURNAL OF CHEMICAL EDUCATION, vol. 87, no. 3, 1 March 2010 (2010-03-01), US, pages 326 - 330, XP055959367, ISSN: 0021-9584, DOI: 10.1021/ed800081t

## Beschreibung

### Gebiet der Erfindung

Die Erfindung betrifft ein System zur Messung für die Ramanspektroskopie.

### Hintergrund der Erfindung

Zur Prozesskontrolle in der chemischen und pharmazeutischen Industrie, in der Medizintechnik z.B. zur Messung von Zuständen am menschlichen Körper, zur Umweltüberwachung, in der Lebensmittelindustrie und zur Erforschung von verfahrenstechnischen Vorgängen ist die Ramanspektroskopie optimal geeignet. Die bekannten Spektroskopie-Geräte weisen den wesentlichen Nachteil auf, dass es erforderlich ist, starke Laser einzusetzen, die ein Kosten- und vor allem ein Sicherheitsproblem darstellen. Dies ist auch Grund für die bisherige gehemmte Verbreitung von Ramanspektroskopie-Systemen.

Prozesse in Industrieumgebungen mittels Ramanspektroskopie zu überwachen ist mit bisherigen Geräten schwierig oder sogar verunmöglicht, da am Markt verfügbare Systeme auf Laserleistungen in der Größenordnung von mehreren hundert Milliwatt (typisch bei einer Anregungswellenlänge von 785 nm sind 500 mW) ausgelegt sind. Demgegenüber erlauben beispielsweise die europäischen Explosionsschutzbestimmungen (ATEX) nur max. 35 mW in ständig-, häufig- oder langzeit- zündfähigen Atmosphären.

Optische Anwendungen im Feld der Raman-Spektroskopie fußen typischerweise auf der Messung der Transmission, weil dabei besonders viel Licht am Detektor ankommt. Die Remission zeigt gegenüber der Transmission i.d.R. um einen Faktor zwischen etwa 100 bis 1000 geringere Lichtstärken und ist daher schon nicht mehr so verbreitet wie die Transmission. Die Fluoreszenz ist gegenüber der Remission nochmals ca. Faktor 100 schwächer und gilt als die "nachweistechnische Königsdisziplin". Die Fluoreszenz liegt hinsichtlich der Nachweis-Auflösung in etlichen Molekülmischungen bereits an der Grenze, so dass eindeutig selektive Messungen für den Fachmann eine außerordentliche Herausforderung darstellen.

Die Ramanspektroskopie ist allerdings nochmal einen ungefähren Faktor 100 schwächer als die vorgenannte Fluoreszenz, woraus sich erhebliche Schwierigkeiten in der Praxis ergeben. Um die Nachweis-Auflösung zu steigern und trotz dieser Schwierigkeiten überhaupt ramanspektroskopische Messungen durchführen zu können, verwendet man im Stand der Technik sehr starke Laser, die jedoch 2 Nachteile aufweisen:
Erstens ist eine Anwendung im weitverbreiteten "Ex-Bereich" (dieser umfasst die vorgenannten Bereiche mit ständig-, häufig- oder langzeit- zündfähigen Atmosphären) chemischer und pharmazeutischer Produktionen im Ergebnis nicht durchführbar.

Zweitens kann tierisches und/oder menschliches Gewebe durch die hohe Lichtbelastung geschädigt werden. Damit ist auch vor der Sicherheitslage der Einsatz bisheriger Ramanspektroskopie-Systeme nicht verantwortbar.

Überdies sind auch die Initialkosten für bisher verfügbare Ramanspektrometersysteme sehr hoch. Die Investitionskosten für eine Prozessinstallation sind typischerweise unverhältnismäßig hoch, wenn damit nur einzelne Parameter überwacht werden sollen. Viele Applikationen rechtfertigen diese Kosten nicht. Aus diesen Gründen sind Ramananalysatoren aktuell in der Produktion zur Prozessbeobachtung praktisch nicht existent, obwohl die Erfinder im Laborbereich zeigen können, dass eine Reaktionskontrolle durchaus möglich ist.

Die hier beschriebene Erfindung setzt diesen Stand voraus und beschäftigt sich vielmehr mit einem energiesparenden System, welches mit niedriger Laser-Leistung betrieben werden kann und somit den Einsatz in verschiedensten, auch sensitiven Umgebungen erst ermöglicht.

Der Artikel von Mohr Christian et al.: "Inexpensive Raman Spectrometer for Undergraduate and Graduate Experiments and Research",JOURNAL OF CHEMICAL EDUCATION, Bd. 87, Nr. 3, 1. 2010, Seiten 326-330", offenbart ein kostengünstiges Ramanspektrometer mit einer Anregungslichtquelle von weniger als 4 mW Ausgangsleistung, deren Strahlung durch ein Objektiv auf eine Probe fokussiert wird. Die Raman-Rückstreuung von der Probe wird durch dasselbe Objektiv mit einer weiten Apertur aufgenommen. Um das Anregungslicht ins Objektiv einzukoppeln, ohne die Raman-Rückstreuung zu verhindern, wird ein kleinstmöglicher Teil einer transparenten Scheibe mit einem reflektierenden Aluminiumfilm beschichtet.

### Allgemeine Beschreibung der Erfindung

In der hier beschriebenen Erfindung wird ein System dargestellt, welches es erlaubt die Laser-Leistung durch eine neuartige Optik soweit zu reduzieren, dass die bestehenden Nachteile der Ramanspektroskopie beseitigt werden. Die Erfindung ermöglicht damit eine weitere Verbreitung und den Einsatz der Raman-Technologie in bisher unzugänglichen Bereichen. Die Erfindung wird vom Gegenstand des Anspruchs 1 definiert.

Ziel der vorliegenden Erfindung ist beispielsweise die Ermöglichung einer Überwachung chemischer Prozesse im weitesten Sinne, welche ein hohes Potential an Qualitätssteigerung und/oder Ausbeutesteigerung und/oder Durchsatzsteigerung birgt. So stößt die vorliegende Erfindung in die gleiche Richtung vor, die beispielsweise die bundesweite Initiative der Einführung der nächsten Generation von intelligenter Prozessüberwachung (Industrie 4.0) bildet, welche wiederum zu konzertierten Aktionen von Industrieverbänden führen kann. Daher wird auch eine gewerbliche Anwendung dieser Erfindung erwartet.

Im Vorfeld wurde eine systematische Industrieumfrage durchgeführt, die zu einer Liste von bisher 70 Anwendungsgebieten führte, für die die vorliegende Erfindung einsetzbar ist. Hieraus seien aus den Bereichen Chemie/Petrochemie, Biotechnologie, Lebensmittel, Gesundheitswesen und Medizintechnik folgende mögliche Startapplikationen als diejenigen mit einer hohen Anzahl von potentiellen Installationen aufgeführt.
- Chemie: Quantifizierung von Einzelkomponenten in binären organischen Lösemittelgemischen, im Speziellen die Quantifizierung von Wasserresten, z. B. in Ethanol,
- Biotechnologie: Quantifizierung von Glucose und/oder Laktaten in Bioreaktoren,
- Petrochemie/Energie: Überwachung und Kontrolle der Gasreinigung per Aminwäsche,
- Gesundheitswesen und Medizintechnik: Gewebeanalytik unter anderem transkutane Messungen (Raman und Fluoreszenz),
- Lebensmittelindustrie: Quantifizierung von Endproduktausbeute bestimmenden Parametern wie Casein in Rohmilch.

Die gefährlich hohe notwendige Laserleistung bisheriger Ramanspektroskopiesysteme von ca. 500 mW wird durch den erfindungsgemäßen Aufbau auf den Bereich der "Laserklasse 1" bzw. maximal 7 mW bzw. unter das in der "Atex-Richtlinie" vorgegebene Leistungsniveau, d.h. max. 35 mW, gesenkt. Damit sind auch in der Medizin(technik) sowie in der Lebensmittel-, Biotechnologie- und Prozessindustrie wesentlich vereinfachte Einsatzmöglichkeiten gegeben. Gegenüber der bisherigen Ramanspektroskopie erlaubt das Messgerät, welches mit der vorliegenden Erfindung aufgebaut ist, ein stark vergünstigtes Preisniveau und einen erleichterten Umgang für ausgewählte Applikationen.

Technologische Basis kann ein neuentwickeltes Ramanphotometer sein, welches durch Einzelphotonennachweis um ca. einen Faktor 10 empfindlicher ist als die weltbesten Ramanspektrometer. Neben der höheren bereits erreichten Empfindlichkeit gehen die Erfinder davon aus, dass das neuentwickelte Ramanphotometer nur 1/10 der Baugröße herkömmlicher Geräte aufweist. Aufgrund der eingesetzten Komponenten wird ferner erwartet, dass es eine um den Faktor 10 erhöhte Lebensdauer aufweisen und dadurch für langjährigen Dauereinsatz geeignet sein wird.

Die erfindungsgemäß gefundene 10 bis 100- fach reduzierte Laserleistung erlaubt sowohl einen breiten Einsatz in der Groß-, Lebensmittel- und Petrochemie, als auch einen vereinfachten Umgang mit dem Gerät im Laborbereich für Medizintechnik und biologische Arbeiten ermöglichen.

Es ist vorteilhaft, ein Einzelgerät jeweils auf einen bis max. vier zu messende(n) Stoff(e) auszulegen, so dass es spezifischer ausgelegt ist. Es sei allerdings nicht ausgeschlossen, dass das erfindungsgemäße Raman-Photometer weniger selektiv ausgelegt wird bei gleicher oder besserer Nachweisempfindlichkeit, also dass beispielsweise mehr als vier zu messende Stoffe gleichzeitig aufgelöst werden können, beispielsweise 6 oder mehr Stoffe oder 8 oder mehr Stoffe.

Gegenüber den auf dem Markt befindlichen Spektrometern wird das Ramanphotometer bei kleinerer Anregungsleistung mit einer Nachweisempfindlichkeit von Photoströmen von 10 Ato-Ampere (0,01 Femto-Ampere) ca. um einen Faktor 10 nachweisempfindlicher und kann noch Wellenlängen von UV- bis weit in den Mittelinfrarotbereich (120 nm- 25µm) nachweisen, was bei biologischen Proben von großer Bedeutung ist.

Das Prinzip der Ramanspektroskopie bedeutet, dass in Molekülen i.d.R. über Laserlicht virtuelle molekulare Zustände angeregt werden, obwohl das Molekül bei der angebotenen Quantenenergie keinen Übergang besitzt. Dadurch kommt es zu extrem kurzen Lebensdauern der angeregten Moleküle und zum Zurückfallen in den elektronischen Grundzustand, jedoch ggf. Änderung der Vibrations- und Rotationsquantenzahl. Dies bedeutet eine Wellenlängenverschiebung des Lichtes zum Langwelligen (Stokes-Shift) oder zum Kurzwelligen (Antistokes-Shift) und einen sehr exakt definierten Wellenlängenversatz. Damit sind extrem schmale Emissions-Ramanbanden verbunden, die eine unerreicht hohe Selektivität der Ramanspektroskopie mit sich bringen. Damit wäre eine Krebserkennung über eine optische Methode möglich. Ähnliche molekulare Selektivitäten könnten bei einer gegenüber dem Stand der Technik vereinfachten Anwendung der Ramanspektroskopie auch in vielen anderen medizinischen und chemisch/pharmazeutischen Anwendungsbereichen helfen, eine verbesserte Diagnosemöglichkeit zu schaffen.

Explosionsgefährdete Bereiche umfassen ca. 70% der Prozess- und Technikumgebungen in den Industriebereichen Chemische-, Pharmazeutische- und Petrochemie, sowie alle zugehörigen "Satellitenindustrien", z.B. Lackindustrie, Formulierungsbetriebe, Mischbetriebe, Bioprozesse (z.B. Faultürme und Biogasanlagen), Abwasserkontrolle und viele andere. Die Einschränkungen in Ex-gefährdeten Bereichen werden nach der Gefährdungshäufigkeit unterschieden. Ex-Zone 0 liegt in der Regel im inneren des Reaktors vor. Ex-Zone 1 liegt in der direkten Umgebung des Reaktors (Fabrikationshalle), Ex-Zone 2 liegt in den Nachbarräumen vor, in denen selbst keine Explosionsgefährdung besteht. Gemäß dieser Zoneneinteilung, die sich auch hinsichtlich staubexplosionsgefährdeten Zonen noch ergänzen lässt, sind die Sicherheitsvorschriften für die entsprechenden Geräte einzuhalten. Eine in diesem Zusammenhang wesentliche Sicherheitsvorschrift ist die eingeschränkte Lichtleistung pro Fläche bei allen optischen Geräten. Dies führt dazu, dass derzeit keine oder nur mit extrem hohem Aufwand zugelassenen Ramansysteme für den explosionsgefährdeten Bereich auf dem Markt existieren. Die Ramanspektroskopie benötigt mit den bisherigen Nachweisstrategien eine sehr hohe Lichtleistung. Zum Einsatz kommen Laser mit mehreren hundert Milliwatt optischer Leistung (gängig 500mW). Dies führt dazu, dass sich diese Spektroskopietechnik und die direkte Prozessverfolgung im Ex-Bereich ausschließen.

Die vorliegende Erfindung hat sich vor diesem Hintergrund die Aufgabe gestellt, ein System und einen Sensoraufbau bereitzustellen, mit welchem es möglich ist, insbesondere in besonders geschützten Bereichen spektroskopische Messungen mittels Ramanspektroskopie durchzuführen.

Die Erfindung vermag es, die in der Beschreibung im Verhältnis zu bekannten Systemen zur Ramanspektroskopie genannten Nachteile zu überwinden.

Die Ramanspektroskopie misst zerstörungsfrei, in biomedizinischen Anwendungen aber nur bei ausreichend niedriger Laserenergie. Sie liefert Messergebnisse in Echtzeit, benötigt keine Reagenzien oder Markierungen wie synthetische Fluorophore und es gibt, anders als bei der Nah- oder Mittelinfrarotspektroskopie, so gut wie keine störenden Wasserbanden. Sie kann eingesetzt werden, um mittels faseroptischer Sonden die Grundschwingung von Molekülen zu erfassen. Damit ist eine in-line-Reaktionsverfolgung z. B. chemischer oder biologischer Prozesse möglich. Im Gegensatz zu optischen Messverfahren im infraroten bzw. im visuellen Bereich wird nicht die Absorption der verwendeten Strahlung bei Probenkontakt gemessen, sondern die von den Molekülen gestreute Strahlung. Um dies zu erreichen, wird typischerweise ein Laser als Lichtquelle verwendet. Das monochromatische Licht der Lichtquelle wird von den Molekülen inelastisch gestreut bzw. reemittiert. Dies wird Ramaneffekt genannt.

Es wird allgemein zwischen drei Arten von Streuung unterschieden: Rayleigh-, Stokes- und Anti-Stokes- Streuung. Bei der Rayleigh-Streuung handelt es sich um elastische, bei den Stokes-Streuungen um inelastische Streuung. Die Frequenz der elastischen Streustrahlung entspricht dabei der Frequenz der Lichtquelle. Ein extrem schmalbandiger Filter (Notch-Filter), der zwischen streuender Probe und Detektor eingebracht wird, nimmt die Rayleigh-Streustrahlung zusammen mit der Anregung aus dem Spektrum. Im Gegensatz zu der Rayleigh-Streuung treten die Stokes- und Anti-Stokes-Streuung nur in einem deutlich geringeren Maße auf. Deshalb ist eine hohe Güte des verwendeten Notch-Filters vorteilhaft. Die Stokes-Streuung besitzt eine geringere und die Anti-Stokes-Streuung eine höhere Energie als die Anregungsstrahlung. Die Stokes-Streuung wird dabei bevorzugt detektiert und ausgewertet, da diese eine höhere Intensität aufweist als die Anti-Stokes-Streuung.

Die Energieverschiebung zu einer höheren bzw. niedrigeren Wellenzahl wird als Ramanshift bezeichnet. Der Ramanshift enthält Informationen über die zu detektierenden Moleküle. Die Einheit des Ramanshifts ist cm-1. Damit diese Streuungen auftreten können, muss das Molekül seine Polarisierbarkeit während der Schwingung ändern. Für eine Untersuchung mittels Ramanspektroskopie eignen sich daher vor allem polarisierbare Verbindungen. Die Polarisierbarkeit eines Moleküls gibt an, in welchem Maße sich die Elektronenwolke "deformieren" lässt. Einen großen Einfluss auf die erhaltenen Spektren hat die Anregungswellenlänge. Je kleiner die Wellenlänge, d. h. je höher die Wellenzahl ist, desto mehr Ramansignal kann detektiert werden. Dies resultiert in höheren Signalbanden. Allerdings kann eine kleine Anregungswellenlänge u.U. das Auftreten von Fluoreszenz begünstigen und ggf. das Ramansignal überlagern.

Bei Systemen und Sensoraufbauten der Ramanspektroskopie ist die extrem geringe Photonenausbeute eine große Herausforderung, die herkömmlich durch eine als erforderlich angesehene hohe Laserleistung und mit den Aufbauten in Verbindung stehenden extrem hohen Kosten der Geräte im Bereich von >100 TEU bewältigt wurde. Hinzu kommen noch die Kosten für Sonde, Ex-housing, Einbau, Anlagenänderungsplanung, Leitungsverlegung etc. Damit ist der Einsatz von Ramanspektrometern auf Forschungsinstitutionen, Kliniken oder teure Applikationen in der Chemie- und Pharmaindustrie beschränkt. Die hohe Laserleistung in aktuell vermarkteten Geräten schränkt zudem die Einsetzbarkeit in Medizin sowie Bio- und Medizintechnologie sehr stark ein.

Gemäß der Erfindung wurden die allgegenwärtigen Vorteile der Ramanspektroskopie beibehalten und ein in der Breite einsetzbares, preiswertes und kompaktes Gerät entwickelt. Dies wurde insbesondere mittels der Idee eines Ramanphotometers, ggf. mit der Erweiterung um die Möglichkeit, mehrere Wellenlängen messen zu können, realisiert.

Ein weiterer Intensitätsvorteil kommt durch die zu erreichende Geometrie zustande. Die Nachweisfläche einer Wellenlänge in den bisher üblichen Spektrometern ist durch die Aufspaltung aller nachgewiesenen Wellenlängen über einen Gitter-Spektralapparat definiert. Der Eingangsschlitz des Spektrometers wird letztendlich auf Pixel der Größe 25 µm bis max. 2000 µm abgebildet. Diese Fläche ist somit die Detektionsfläche.

Beim Photometer entfällt das dispersive Element des Spektrometers. Stattdessen wirkt es als Interferometer. Das Interferometer besteht aus einem großflächigen Filter, welcher nur für die gewünschte Wellenlänge durchlässig ist. Die Größe der lichtempfindlichen Fläche der Avalanche-Diode liegt bei 1 mm², wodurch sich die Detektionsfläche im Vergleich zum Spektrometer um das 20-fache erhöht. Der Lichtgewinn soll auf die reduzierte Laserleistung und dennoch erhöhte Nachweisempfindlichkeit von Molekülen aufgeteilt werden. Durch die zusätzlich erhöhte flächenbezogene Nachweisempfindlichkeit durch Einzelphotonennachweis kommt noch ein Faktor 5 gegenüber den weltweit besten CCD-Sensoren hinzu. Rechnerisch erhält man als theoretische Grenze für die Optimierung der Gesamtempfindlichkeit einen Faktor 100. Eine Verbesserung der Empfindlichkeit um mindestens den Faktor 10 kann daher bereits anhand der skizzierten technischen Möglichkeiten erkannt werden und liegt durchaus im Rahmen der Erfindung.

Für eine nachzuweisende Substanz lässt sich eine scharfe Raman-Detektionsbande zum direkten Nachweis des Analyten sowie eine breitere Fluoreszenzbande, die in der Regel gleichzeitig mit dem Ramanpeak auftritt und über einen breitbandigen Detektor erfasst werden kann, erhalten. Damit kann über typisch maximal drei Wellenlängen eine eindeutige Zuordnung des Messsignals zur gesuchten Analytkonzentration erfolgen. Hierbei muss nur eine der Wellenlängen über eine Avalanche-Diode detektiert werden.

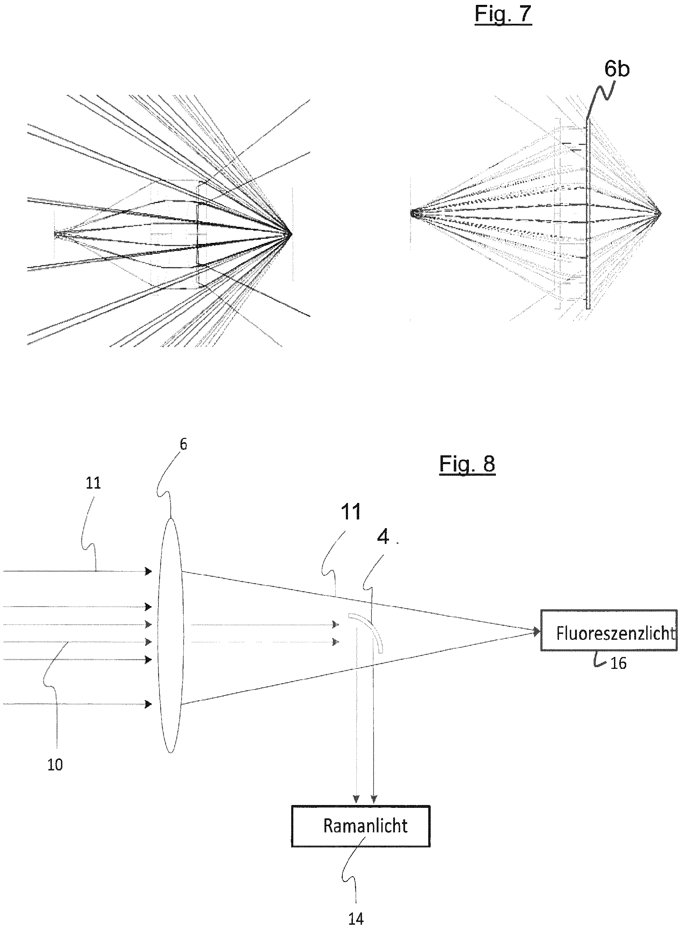

Die zur Auswertung der Fluoreszenz verwendeten Messstellen können in vorteilhafter Weise breitbandig ausgeführt sein. Da so mehr Licht auf der Detektionsseite ankommt, können hierdurch auch preiswerte, hochempfindliche PIN-Dioden als Detektoren eingesetzt werden. Eine mögliche Prinzipskizze zur Simultanmessung von Raman- und Fluoreszenzsignal ist in Fig. 8 gegeben.

Das typischerweise nahezu zeitgleich kommende Fluoreszenzlicht kann in erschwerender Weise die eigentliche Ramanintensität um bis zu den Faktor 100 überstrahlen. Bei einer Referenzmessung und nachfolgender mathematischer Behandlung der beiden Signale, beispielsweise in Form einer Differenzbildung, ist daher zu beachten, dass die beiden Signale unter gleichen Randbedingungen gemessen werden. Hierzu ist die Gleichzeitigkeit der Messung, d.h. eine koinzidente Messung, besonders vorteilhaft.

Diese Gleichzeitigkeit der Messung kann in einer "Photometervariante" beispielsweise über folgende Messanordnung realisiert werden: Das von einer Sonde kommende, über eine geeignete Optik parallelisierte Lichtbündel, wird konfokal konzentriert. Dabei werden die achsennahen Strahlen relativ senkrecht auf den Bandpassinterferenzfilter geleitet, welcher nur oder nur im Wesentlichen durchlässig für das Ramanlicht ist. Nach dem Bandpassinterferenzfilter wird über eine geeignete optische Anordnung das Messsignal, das den Ramanwellenlängen entspricht, "ausgeblendet" und einem oder mehreren Raman-Detektor(en) (Avalanche-Photodiode) zugeleitet. Die vorgenannte Ausblendung kann in diesem Beispiel über eine Faseroptik geschehen oder über einen in den Strahlengang geschobenen Ablenkspiegel von kleiner Ausdehnung, z. B. 1 mm. Auf diese Weise lassen sich Fluoreszenz- und Ramandetektor örtlich besser trennen, sodass es zu keinen sterischen Behinderungen im Messgerät kommt. Die achsenfernen Strahlen laufen am Bandpassfilter und an der Auskoppeloptik vorbei und treffen stark gebündelt unter einem schrägen Winkel auf einen Detektor zur Fluoreszenzdetektion auf.

Die so verwirklichte Gleichzeitigkeit der Messung von Raman- und Fluoreszenzsignal ermöglicht die Messung leicht inhomogener oder zeitlich inkonstanter Messobjekte. Z. B. seien chemische Reaktionen mit leichten aber immer vorhandenen Konzentrationsunterschieden genannt, die sich in einem gerührten Reaktor oder in einer gepumpten Leitung als Schlieren darstellen. Die Schlieren können auch nur einen geringen Konzentrationsunterschied aufweisen, z. B. 1%, was sich aber direkt in der zu bildenden Differenz der beiden Signale ausdrückt. Sei z. B. das Ramansignal 1% des Fluoreszenzsignals und die Gesamtintensität fluktuiert um 1%, so kommt es zu einer 100% Fehlmessung des Ramansignals, wenn die Referenz und das Signal plus Referenz zu unterschiedlichen Zeiten aufgenommen werden.

Z.B. mit APDs, MPPCs oder CPMs können hohe Nachweisempfindlichkeiten erreicht werden. Die Nutzung des Prinzips der Ramanphotometrie in Kombination mit den erfinderischen Sensorgemeometrien führt zu erhöhten Nachweisempfindlichkeiten und zu einem Messgerät, welches den bekannten Messgeräten am Markt deutlich überlegen ist. Durch die Kombination mit dem Sondenkopf gemäß der Erfindung wird erstmals ein für die breite Anwendung verfügbares einfaches, kleines, relativ preisgünstiges Ramanphotometer bereitgestellt.

### Kurzbeschreibung der Figuren

### Es zeigen:

- Fig. 1: Eine erste Ausführungsform des Sensorsystems mit Sondenkopf,
- Fig. 2: eine weitere Ausführungsform von verbesserten Details des Sensorsystems,
- Fig. 3a: Details einer ersten optischen Grenzfläche,
- Fig. 3b: Details einer zweiten optischen Grenzfläche,
- Fig. 3c: Details einer 9-Faser-Sonde,
- Fig. 4: Ausführungsformen für die optische Grenzfläche,
- Fig. 5: eine weitere Ausführungsform des Sensorsystems,
- Fig. 6: ein Beispiel einer 7-Fasersonde zum Einsatz im Sensorsystem,
- Fig. 7: Raytrace-Modellierung einer Weitapertur-Sonde,
- Fig. 8: Beispiel für den verbesserten Aufbau für eine gleichzeitige Messung von Raman- und Fluoreszenz-Licht,
- Fig. 9: eine weitere Ausführungsform des Sensorsystems,
- Fig. 10: eine photographische Darstellung einer Vorserienversion einer Ausführungsform des Sensorsystems gemäß Fig. 9.

### Detaillierte Beschreibung der Erfindung

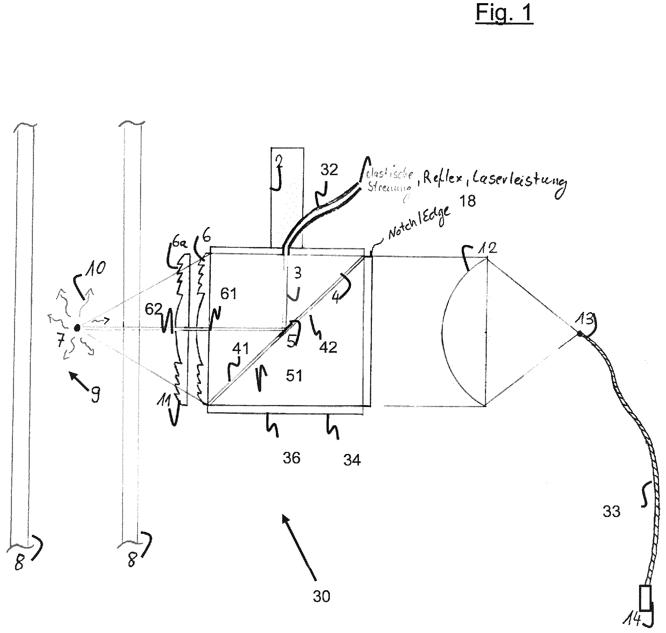

Bezug nehmend auf Fig. 1 ist ein erfindungsgemäßes Sensorsystem 30 gezeigt. Das Sensorsystem 30 umfasst eine monochromatische Lichtquelle 2, in diesem Beispiel einen vergleichsweise schwachen Laser, mit einer Leistung von etwa 1 mW. In anderen Fällen des erfindungsgemäßen Sensorsystems 30 können aber auch Lichtquellen 2 mit einer Leistung bis zu 7 mW oder bis zu 30 mW umfasst sein. Bevorzugt weist die Lichtquelle 2 des Sensorsystems 30 eine deutlich geringere Leistung auf als die derzeit üblichen Lichtquellen, die eine Leistung von typischerweise mindestens 300 mW aufweisen, d.h. dass die Lichtquelle 2 eine Leistung von weniger als 300 mW aufweist.

Der mit Bezug auf Fig. 1 gezeigte Aufbau 30 umfasst eine optische Anordnung 4, 5, 6, 6a, die das eingestrahlte Raman-Licht 3 mit der zu untersuchenden Probe 7 wechselwirken lässt.

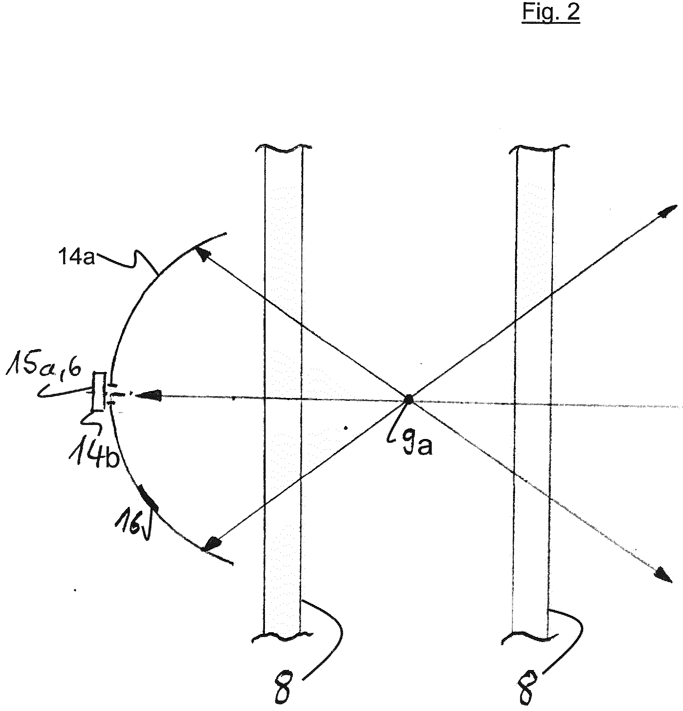

In Fig. 2 ist gezeigt, dass das Sensorsystem 30 ein Detektorsystem 14, 15a, 15b, 16 umfassen kann, welches in vorteilhafter Weise eine möglichst große Nachweisempfindlichkeit aufweist und je nach Anwendungsfall insbesondere aus einer Mehrzahl an Detektoren bestehen kann.

Im Folgenden werden die wesentlichen optischen Teile und Funktionen des Aufbaus 30 beschrieben. Ein besonderes Augenmerk der vorliegenden Beschreibung liegt dabei auf einem speziellen Sondenkopf, der den vorliegenden erfinderischen Aufbau 30 besonders komfortabel und einfach bedienen lässt, und der in einer Ausführungsform dargestellt ist in Fig. 1.

Das Laser-Licht 3 wird in Fig. 1 über einen beispielsweise im Freistrahl direkt angekoppelten Laser 2 seitlich in den Sondenkopf geführt. Die Einkopplung kann auch über einen Lichtwellenleiter 32 (Multimode- oder Monomodefaser) erfolgen, sofern dies keine sonstigen Nachteile mit sich bringt. Das Laser-Licht 3 dringt damit als Strahl, in einer Ausführungsform als möglichst dünner Strahl 3, auf eine Spiegelanordnung 4. Die Spiegelanordnung 4 umfasst beispielsweise eine optische Grenzfläche in Form einer Planscheibe, also ein optisch planes Medium, wie eine Glasscheibe, insbesondere aus Borosilikat, Quartz oder Saphir oder aus einem anderen optisch transparenten Material, welches gegenüber Luft einen erhöhten Brechungsindex aufweist.

Die Oberfläche dieser Spiegelanordnung 4 ist im gezeigten Beispiel der Fig. 1 nur teilweise mit einer reflektierenden Schicht versehen. Mit anderen Worten ist die Spiegelanordnung 4 eine teildurchlässige Planscheibe. Die Teildurchlässigkeit der Spiegelanordnung 4 bezieht sich dabei vorzugsweise auf einen Teilbereich der Oberfläche, so dass beispielsweise ein erster Teilbereich 5 der Oberfläche der Spiegelanordnung 4 gering durchlässig und ein zweiter Teilbereich 51 der Oberfläche der Spiegelanordnung volldurchlässig ausgebildet ist.

Die Teildurchlässigkeit kann beispielsweise erreicht werden, indem eine reflektierende Planscheibe durch Ätzen oder andere Vorgänge teilweise bzw. bereichsweise von einer reflektierenden Schicht befreit wird, an anderen Positionen liegt diese reflektierende Schicht dann noch vor. In diesem Ausführungsbeispiel ist ungefähr zentrisch (oder an einer anderen Stelle innerhalb des Spiegels) mit der Position 5 ein reflektierender Bereich - d.h. ein teildurchlässiger Bereich - verblieben. Hier wird das Laser-Licht reflektiert, zum Beispiel wie in Fig. 1 gezeigt um 90° oder einen anderen günstigen Winkel, und wird so durch ein Linsensystem in den Prozessraum 9 geleitet. In vorteilhafter Weise wird bei der Erfindung das Licht nicht weiter fokussiert, es bleibt also unfokussiert. Deshalb können die Linsen 6 und 6a in der Mitte oder einer anderen günstigen Position durchbohrt sein, oder mittels einer anderen geeigneten Methode von lichtbrechenden Eigenschaften befreit sein, so dass dieser Lichtstrahl ungehindert durchtritt.

Mit anderen Worten weisen die Linsen 6 und 6a je ein Bohrloch 61, 62 auf, in welchem die Linsen 6 und 6a keine lichtbrechenden Eigenschaften aufweisen. In das erzeugte Bohrloch kann bevorzugt eine plane Scheibe aus Saphir oder Diamant oder einem anderen geeigneten Material eingebracht werden, die durch Ihr spezifisches Ramansignal die kontinuierliche Überwachung der Laserleistung (welche direkt proportional zum Ramansignal ist) gewährleistet und als interner Standard/Referenz fungiert.

Das in den Prozessraum 9 dringende Anregungslicht 3, trifft dort auf ein in den Prozessraum 9 eingebrachtes Produkt, so dass sich je nach eingesetztem Produkt Streuwirkungen von Fluiden, Partikeln und/oder Gasen ergeben. Zu den vorgenannten Streuwirkungen zählt insbesondere die Raman-Streuung 10 oder aber auch eine Fluoreszenz-Emission. Sowohl die Raman-Streu-Strahlung 10 als auch die Fluoreszenz-Emission breiten sich typischerweise isotrop in alle Raumwinkel aus. Die Raman-Streuung ergibt das Licht 10. Der Streu-Ort 7 wird im Beispiel der Fig. 1 über die Linsen-Anordnung 6a und 6, d.h. einer Anordnung von 2 Linsen, wobei die Anordnung beispielsweise aus 1 bis 6 Linsen bestehen kann, aufgefangen und im weiteren Strahlengang mit großem Raumwinkel, auch als Apertur bezeichnet, detektiert. Der durch den Aufbau 30 ermöglichte große Raumwinkel erlaubt eine wesentliche Erhöhung der Lichtausbeute. Aus der Erhöhung der Lichtausbeute wiederum ergibt sich ein Vorteil für die hohen Nachweis-Empfindlichkeiten, die zu der Möglichkeit der Reduzierung der Laser-Leistung beitragen.

Das Licht 10 kann dann in der in Fig. 1 gezeigten Ausführung als ungefähr paralleles Licht (oder in einer anderen geometrischen günstigen Anordnung) durch das Spiegelsystem 4 hindurchtreten. Mit anderen Worten durchdringt das Raman-Licht 10 die niedrigreflexiven Bereiche 5a der optischen Grenzfläche 4 von der ersten Seite 41 zu der zweiten Seite 42. Die niedrigreflexiven bzw. transmissiven Bereiche 51 der optischen Grenzfläche 4 sind bevorzugt voll- oder nahezu volldurchlässig, so dass nur ein geringer oder gar kein Anteil des Raman-Lichts 10 in eine andere Richtung abgelenkt wird, sondern der volle oder nahezu volle Anteil des Raman-Lichts 10 zum Nachweisort 13 gelangt.

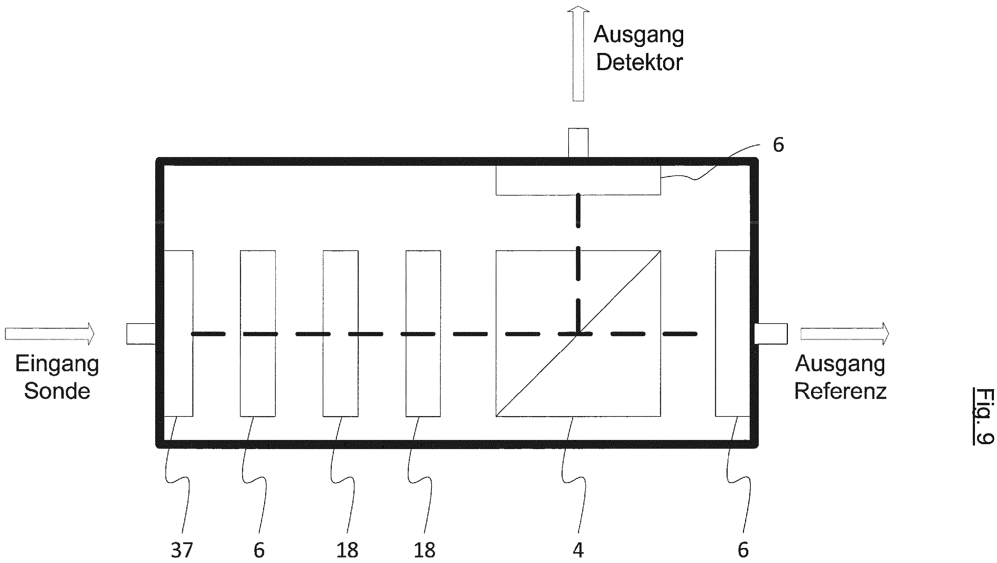

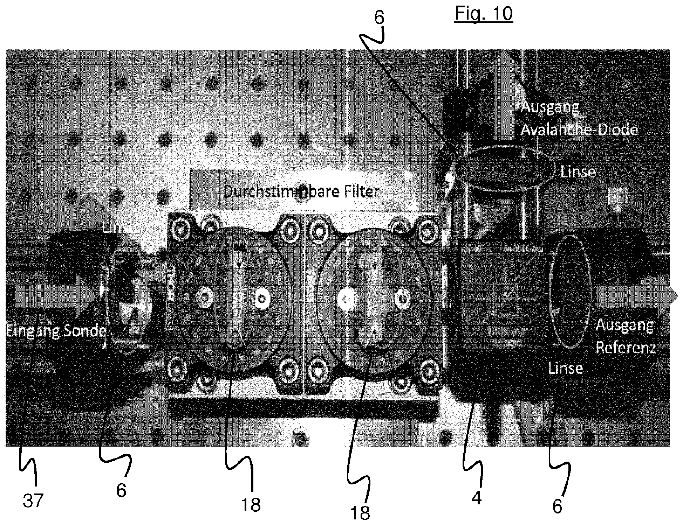

Im weiteren Strahlengang wird das Raman-Licht 10 von der optischen Grenzfläche 4 auf eine Sammellinse 12 und zum Nachweisort 13 gerichtet. In der Fig. 1 nicht gezeigt können an geeigneten Orten im optischen Strahlengang Filtersysteme integriert werden, die den Anteil an direkter Streuung und anderen Quellen elastischer Strahlung in geeigneter Weise unterbinden können, vgl. hierzu z.B. Figs. 9 und 10.

An der in Fig. 1 mit Position 13 bezeichneten Stelle, d.h. dem Nachweisort 13, kann eine Glasfaser- oder Kunststofffaser-Anordnung 33 oder eine andere optisch leitende Anordnung - ggf. auch im Freistrahl - angeordnet sein und das Raman-Licht 10 zu einem Detektor 14 leiten. Es ist selbstverständlich auch möglich, den Detektor 14 in einer anderen Ausführungsform auch direkt an Position 13 anzuordnen.

Mit der in Fig. 1 dargestellten Anordnung 30 kann das Produkt 9 getrennt durch optisch transparente Flächen 8, also beispielsweise Scheiben 8 insbesondere aus Glas, mit hoher Empfindlichkeit nachgewiesen werden. Die extrem einfache Bauform, insbesondere mit dem individuell anpassbaren Spiegel 4 kann in besonders kostengünstiger Weise realisiert werden. Die Kostenreduktion wird zum einen durch die Verwendung von einfachen und wenigen optischen Bauelementen, aber auch mittels einer kosteneffizienten Lösung für den Nachweis erreicht. Kostensenkungen im Nachweisbereich ergeben sich insbesondere dadurch, dass der Aufbau 30 so hergerichtet ist, dass eine geringe Nachweisempfindlichkeit des Detektors 14 ausreichend ist, und dennoch eine vergleichbare Nachweis-Auflösung erhalten wird und der Detektor 14 dadurch preiswerter hergestellt werden kann.

In einer Ausführungsform, die mit dem in Fig. 1 gezeigten Aufbau 30 realisierbar ist, kann die Schärfentiefe an dem Ereignisort 7 reduziert werden, um eine lokale Auflösung in Strahlrichtung zu erhalten. Dies kann günstig sein, um z. B. in fluiden Schichten Vorgänge oder Vermischungen zu beobachten.

Ein Vorteil der mit Fig. 1 gezeigten Spiegelanordnung gegenüber beispielsweise halbdurchlässigen Spiegeln besteht darin, dass bei halbdurchlässigen Spiegeln jeweils die Hälfte des Lichtes - und zwar sowohl auf dem Hin- als auch auf dem Rückweg - in die falsche Richtung gelenkt wird, und damit für den Nachweis verloren ist. Gegenüber dichromatischen Spiegeln besticht die Einfachheit der Bauform und die Übertragbarkeit auf jede Wellenlänge, die bei den dichroitischen Spiegeln auf eine Wellenlängengrenze fixiert ist. Hierdurch ist dieses Element für sämtliche gängigen Wellenlängen/Wellenlängenbereiche der Fluoreszenzanregung im Bereich der Fluoreszenzspektroskopie/Fluoreszenzphotometrie als auch in der Raman-spektroskopie/Ramanphotometrie einsetzbar.

Die hohe Effizienz des Aufbaus 30 wird auch dadurch verbessert, dass das Licht aus einem großen Raumwinkel, also aus einem großen Apertur-Winkel, von der Linsenanordnung 6 und 6a - und ggf. weiteren Linsen - aufgefangen wird. Das gestreute Licht hingegen, welches achsenparallel oder nahe der optischen Einstrahlachse ausgesendet wird, wird durch den Spiegel 5 blockiert. Es kann damit eine besonders geringe Tiefenschärfe erhalten werden. Auch eine andere Anordnung der Spiegel 4 und der Position 5 kann sinnvoll sein; Es kann sogar günstig sein, nur definierte Winkelbereiche durch den Spiegel hindurchzulassen, wenn diese z. B. in der Partikel-Messtechnik berechneten Winkelbereiche bzw. Streuwinkel z.B. über die Mie-Theorie eine Größenaussage über die Partikel oder ähnliches zulassen. In einer solchen Anordnung wären beispielsweise weitere oder andere Teilbereiche 51 in der optischen Grenzfläche 4 vorgesehen, die teildurchlässig bzw. volldurchlässig sind.

Diese Anordnung 30 gemäß Fig. 1 kann ergänzt sein und wirkt sich besonders günstig aus durch additive Elemente, wie insbesondere die in Fig. 1 eingefügte elastische Streuung 32 am Einstrahlort 2; Somit kann, leicht versetzt zum einstrahlenden Laser, dasjenige Licht, welches vom Prozessort 7 gestreut wird und über Spiegel 5 an die Position 2 oder 3 geleitet wird, gesondert gemessen werden. Man erhält damit ein Referenz-Signal aus dem Aufbau 30 der Raman-Streuung, wobei vermittels des Referenz-Signals Absolut-Schwankungen des Lasers 2, die sich potenziell in dem Ergebnis proportional oder anders niederschlagen können, kontrolliert werden können und evtl. auftretende Schwankungen aus dem Effekt herausgerechnet werden können. Mit anderen Worten gelangt das auf den hochreflexiven Bereich 5 der optischen Grenzfläche 4 auftreffende Licht - d.h. insbesondere Streulicht - auf einen Streulicht-Detektor 32 und wird als Referenzsignal ausgewertet, um die Signalqualität zu steigern.

Ähnliche Wirkungen und auch weitere ergeben sich in einer Ausführungsform gemäß Fig. 2, wenn neben der in Fig. 2 rechts dargestellten Scheibe 8 eine zweite Scheibe 8 auf einer von der Probe abgewandten Seite angeordnet wird, und das im Fokus 9a zusammengehende Licht danach aus der Apparatur austritt. Es lässt sich in einem solchen Aufbau 30 gemäß Fig. 2 ein Sammel-Spiegel 14a anbringen, der das Licht wieder in den Brennpunkt 9a zurückspiegelt und es in Richtung Detektorsystem leitet. Mit anderen Worten kann vermittels eines zusätzlichen Reflektors 14a ein Teil des Raman-Lichts 10 zum Prozessraum 9 und zum Brennpunkt 9a zurückgeleitet werden, so dass auch dieser Teil des Raman-Lichts 10 zu dem Detektor 14 (siehe Fig. 1) geleitet werden kann. Damit verdoppelt man ungefähr das Signal-Rauschverhältnis und damit die Nachweisempfindlichkeit.

Die in Fig. 2 gezeigte Anordnung 15a vermisst dabei das durchgehende Licht mit einem einfachen Detektor 14b erneut. Es ist ferner eine Anordnung 15b integriert, die als Strahlfänger/Lichtfalle 15b fungiert. Mit anderen Worten wird das (nahezu) achsenparallele Licht in dieser Ausführungsform aufgefangen und nicht auf den Brennpunkt 9 zurückgeworfen.

In besonders vorteilhafter Weise des in Figs.1 und 2 gezeigten Systems 30 erfolgt keine Fokussierung des einstrahlenden Laser-Strahls 2. Somit kann in explosionsgeschützten Bereichen und im Medizintechnikbereich (z.B. transkutane Fluoreszenzspektroskopische / Fluoreszenzphotometrische als auch Ramanspektroskopische / Ramanphotometrische) ein Aufbau 30 realisiert werden, um dort Messungen durchführen zu können. Die Anordnung vermag dabei in besonders vorteilhafter Weise sogar schwache Laser wie solche in der Laser-Klasse 1, also Laser, die für übliche Laser-Pointer eingesetzt werden, zu verwenden. Damit ist eine Zulassung für diese Laser und eine Absicherung des bestrahlten Raumes zum Schutz des menschlichen Auges nicht mehr notwendig.

Die besondere Anordnung der getrennten Einstrahlung 2 und Nachweisposition 13 verhindert ein Eindringen der durch die Gläser verursachten Fluoreszenz in den Messkanal. Dies wird noch dadurch verbessert, da die Gläser 8 nur an der Stelle fluoreszieren, an denen der Lichtstrahl 2 und das Raman-Licht 10 hindurchtritt, dort jedoch keine Detektion stattfindet. Mit anderen Worten wird das zu messende Raman-Signal 10 mittels der Gläser 8 von einem Störsignal wie insbesondere einem Fluoreszenz-Signal teilweise oder vollständig getrennt. Dies erlaubt eine Senkung der Strahlleistung, weil entstehende Störgrößen ausgeschaltet bzw. verringert werden. An Position 16 in der Ausführung in Fig. 2 ist ein sekundärer Detektor 16 zur Detektion von Störeinflüssen, welche eine Verunreinigung des zu vermessenden Mediums (Trübung) hervorrufen, angeordnet. Durch die Anordnung einer speziellen Bauform von kaskadierten Fresnel Linsen oder einer anderen optischen Anordnung ähnlicher Wirkung lässt sich eine extrem hohe Sammeleffizienz darstellen. Gerade durch die flache Bauform der Fresnellinse lassen sich 2 oder mehrere hintereinanderschalten und damit die Apertur weiter steigern. Es ist durchaus möglich, mit diesem besonderen Aufbau 30 Aperturen besser als 1/0,8 zu erhalten, was mit üblichen auch guten Objektiven nicht erreichbar ist.

Zur Detektion des Raman-Signals 10 können z.B. Gitter-Spektrometer, Spektrophotometer, Fabry-Perot-Interferometer, oder Photometer eingesetzt werden. Als besonders vorteilhaft erweist sich eine Anordnung über AOTF-Selektoren, d.h. akustooptische Modulatoren oder Micro-Opto-Electro-Mechanical Systems (Mems), da diese auf großer Fläche die eingestellte Wellenlänge transmutieren lassen können. Hiermit ergeben sich Vorteile z.B. für die Anwendung, wenn der Messort 9 nicht aus einem Fluid, sondern aus einem streuenden Objekt besteht. Der eingestrahlte Laser 2, LED oder gefilterte breitbandige Lichtquelle wird dabei in die Nah-Umgebung des Fokus 9a bzw. des streuenden Objekts gestreut und erzeugt an der Stelle 9, d.h. im Prozessraum 9 bzw. im Fokus 9a Raman-Licht 10. Es erzeugt außerdem ggf. Fluoreszenz-Licht, welches von der Umgebung des streuenden Mediums ebenfalls in Detektionsrichtung geleitet wird. Hierdurch wird der nachzuweisende Messfleck 9a - also der Fokus 9a - größer als der vom Laser 2 eingestrahlte Punkt 3. Eine Anordnung, die großflächig detektiert, hat hier besondere Vorteile gegen einen ortsaufgelösten Gitter-Spektral-Apparat, da gemäß Helmholtz-Lagrange-Zusammenhang die Gegenstandsgröße und die Bildgröße über einen maximalen Apertur-Winkel verknüpft sind. Dies führt dazu, dass auf einen engen Eintrittspunkt oder Eintritt-Spalt eines Spektrometers nur ein kleiner Gegenstandsbereich abgebildet wird.

Bei Einsatz einer flächigen Detektion 14 hingegen kann dies beispielsweise wie folgt verbessert werden. So ist in einer bevorzugten Anordnung als Detektor 14 eine Kombination von einem AOTF-Detektor mit einem großflächigen Customized Channel Photomultiplier (CPM) vorgesehen. Anstelle des CPM ist beispielsweise auch der Einsatzeiner Avalanche-Photo-Diode (APD), oder eines multi-pixel-photon-counters (MPPC's), aber auch von Bildverstärkern, CCD- und/oder CMOS-Detektoren sowie "normaler" Photodioden möglich. Mit allen vorgenannten Ausführungsformen eines Detektors 14 kann bei geeigneter Kombination eine wesentliche Steigerung der Nachweisempfindlichkeit erreicht werden, welche sich in der Reduktion der einzusetzenden Anregungsleistung z.B. in Form eines Lasers und/oder einer niedrigen Nachweisgrenze des zu untersuchenden Analyten ausdrückt.

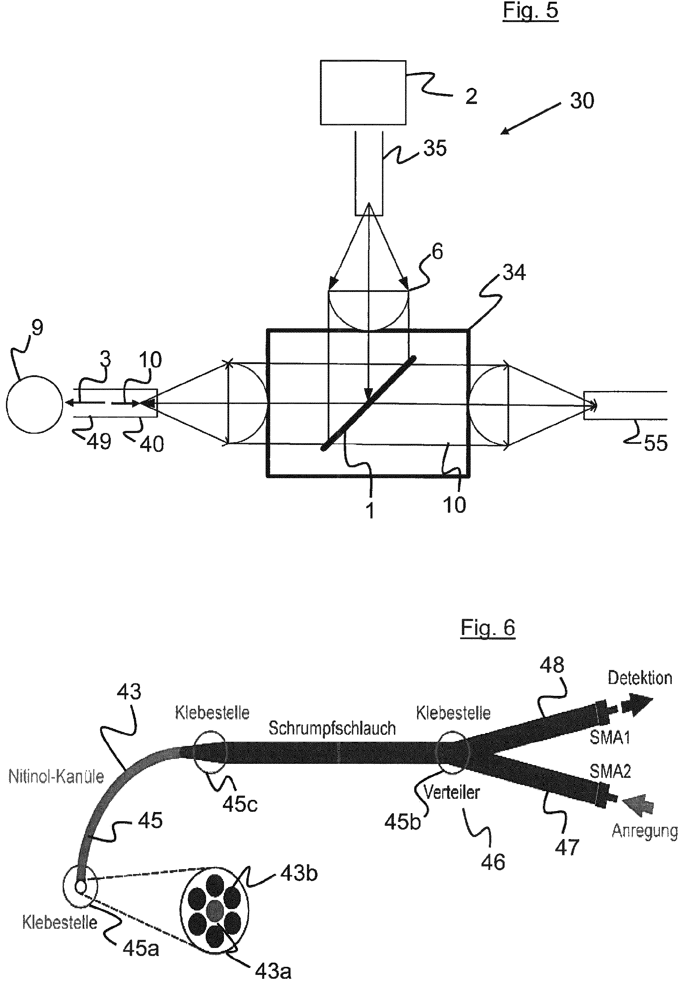

Bei dem Beispiel der Fig. 1 wird also mit anderen Worten aus einem beispielsweise gepulst oder kontinuierlich betreibbaren Laser 2 monochromatisches Licht 3 in eine Faser oder direkt in einen Sondenkopf 34 eingekoppelt. Das vom Objekt reflektierte oder remittierte Raman-Licht 10 gelangt entweder über eine Glasfaser 33 oder eine entsprechende Freistrahloptik zur Detektionseinheit 14. Die entsprechende Messmethodik ist in Fig. 5 skizziert. Fig. 5 zeigt dabei ein Beispiel für eine Ramanphotometermessung.

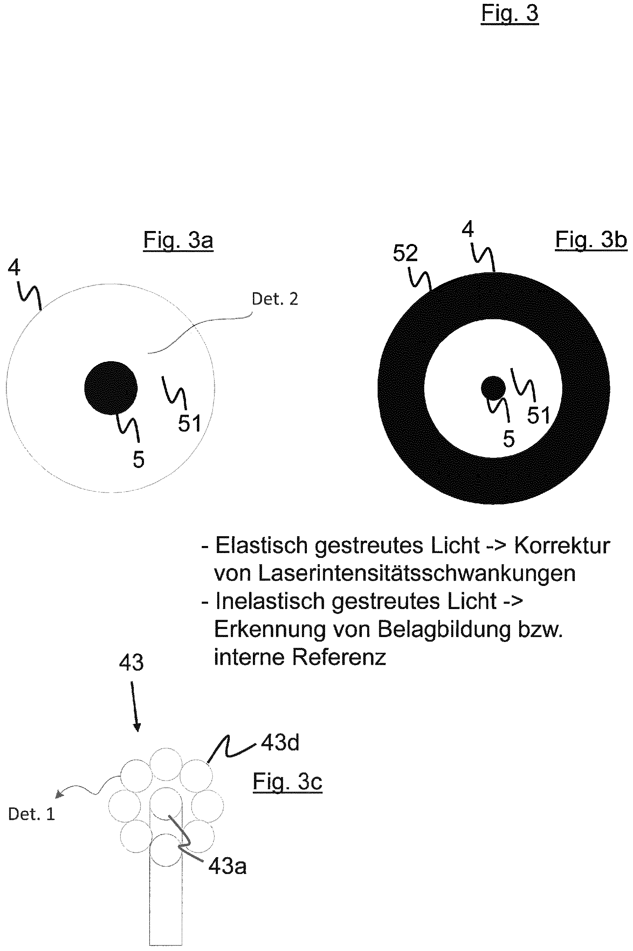

Fig. 3 zeigt Details verschiedener optischer Grenzflächen 4. In Fig. 3a ist eine optische Grenzfläche 4 gezeigt, die im Innenbereich einen reflektierenden Bereich 5 und konzentrisch um den reflektierenden Bereich herum einen transmissiven Bereich 51 aufweist. Fig. 3b zeigt eine optische Grenzfläche 4, die ebenfalls im Innenbereich einen reflektierenden Bereich 5 und konzentrisch um den reflektierenden Bereich herum einen transmissiven Bereich 51 aufweist; Der Innenbereich 5 der Ausführungsform der Fig. 3b ist allerdings kleiner, der transmissive Bereich 51 ringförmig ausgebildet. Um den transmissiven Bereich 51 schließt sich ein weiterer reflektiver Bereich 52 an. Die Ausführungsform der Fig. 3b ist dahingehend vorteilhaft, dass diese bei elastisch gestreutem Licht eine Korrektur von Laserintensitätsschwankungen bereitzustellen vermag. Bei inelastisch gestreutem Licht ist eine Erkennung von Belagbildung bzw. die Heranziehung als interne Referenz ermöglicht.

Fig. 3c zeigt eine Aufsicht eines Beispiels einer Glasfaser-Bündelleitung 43 in Form einer 9-Faser-Sonde 43 mit 8 Bild-Leitungen 43d und 1 Laserlicht-Leitung 43a im Zentrum. Eine Anregungs-Licht-Faser 43a führt das Licht von der Lichtquelle 2 zu dem Objekt 9, acht Raman-Licht-Fasern 43b führen das Raman-Licht 10 zum Detektor. Die weitere Beschreibung zu einer Mehr-Faser-Sonde 43, bei der sich die Faser 43a für den Transport des Laser-Lichts 2 von den Fasern 43b für den Transport des Raman-Signals 10 unterscheidet, ist der Beschreibung zur 7-Faser-Sonde 43 mit Bezug auf Fig. 6 zu entnehmen.

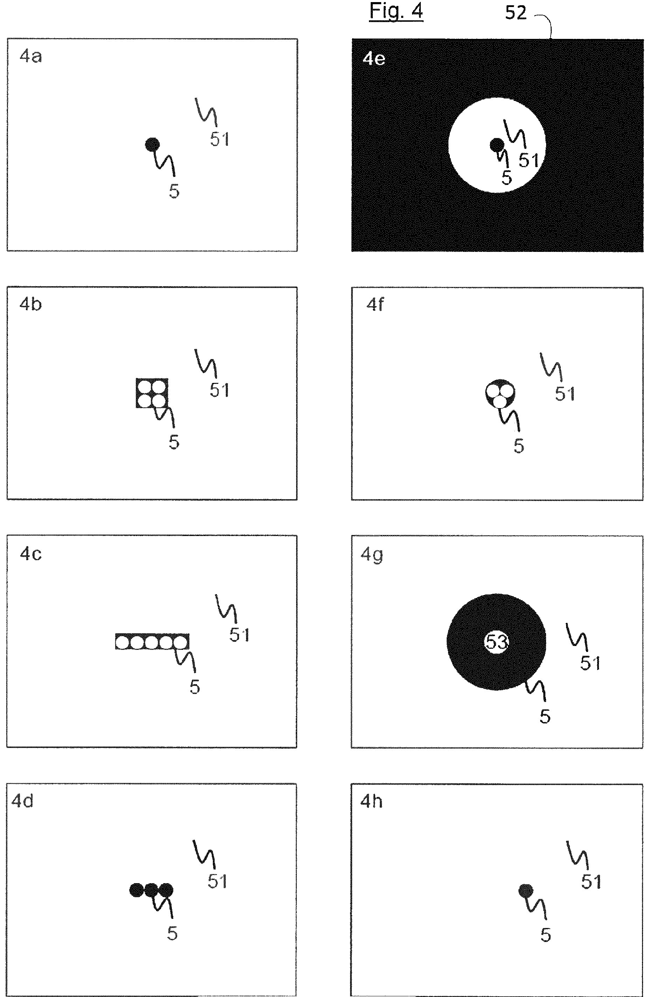

Fig. 4 zeigt eine Abbildung mit einer Auswahl von acht verschiedenen Ausführungsformen 4a bis 4h für die Ausführung der optischen Grenzfläche 4. Die Ausführungsformen beziehen sich also auf Beispiele für Geometrien der Umlenkspiegelbeschichtung 5 bzw. für die Anordnung der reflexiven 5 und nichtreflexiven Bereiche 51 der optischen Grenzfläche 4. Jede Ausführungsform 4a bis 4h ermöglicht ein spezifisches selektives Ausblenden von Raumwinkelanteilen des inelastisch gestreuten Lichtes 10 und damit eine mögliche Erhöhung von Messeffekten oder Unterdrückung von Störeffekten. Die Ausführungsform 4a der optischen Grenzfläche 4 bzw. 4a entspricht dabei der zu Fig. 1 besprochenen Anordnung, bei welcher ein reflexiver Kernbereich 5 im Zentralbereich der optischen Grenzfläche 4a angeordnet ist, und um den Kernbereich 5 herum ein transmissiver Bereich 51 angeordnet ist. Die Grenzfläche 4b zeigt einen quadratischen Kernbereich 5, um den der transmissive Bereich 51 herum angeordnet ist. Die Grenzfläche 4c zeigt einen rechteckigen Kernbereich 5, um den der transmissive Bereich 51 angeordnet ist. Die Grenzfläche 4d zeigt schließlich einen Kernbereich 5, der drei nebeneinander angeordnete Kreisbereiche umfasst, die von dem transmissiven Bereich 51 umgeben sind.

Die Grenzfläche 4e ist mit einem runden reflexiven Bereich 5 wie einem "Fleck" ausgerüstet, und weist einen ebenfalls runden transmissiven Bereich 51 konzentrisch um den reflexiven Bereich 5 herum auf. Der äußere Bereich 52 ist wiederum reflexiv ausgerüstet. Die Grenzfläche 4e lässt somit nur einen vergleichsweise geringen Anteil des Raumwinkels hindurch. Die Grenzfläche 4f weist einen vergrößerten runden reflexiven Bereich 5 auf.

Die Grenzfläche 4g ist invers zu der Grenzfläche 4e aufgebaut, so dass im Zentrum ein transmissiver Bereich 53, konzentrisch dazu ein reflexiver Bereich 5 und außen wieder ein transmissiver Bereich 51 angeordnet ist. Der Grenzfläche 4g ist vorteilhaft, dass achsennahe Strahlung durch die optische Grenzfläche 4 durchgeleitet wird. Je nach Anordnung kann die Grenzfläche 4g beispielsweise bei einem solchen Detektor 14 eingesetzt sein, der der Strahlungsquelle gegenüberliegend angeordnet ist. Die Grenzfläche 4h schließlich weist einen reflexiven Bereich 5 auf, der nicht zentriert angeordnet ist, sondern seitwärts versetzt. Dies ermöglicht beispielsweise den versetzten Einbau der Strahlungsquelle 2.

Bezug nehmend auf Fig. 5 ist ein schematischer Aufbau eines Aufbaus 30 mit Sondenkopf 34 gezeigt. Das Anregungslicht 3 wird vom Laser 2, der eine Sammellinse aufweist, mittels eine Faser 35 in den Sondenkopf 34 eingekoppelt. Das Laserlicht 3 trifft auf einen Strahlenteiler 1, wonach ein Teil des Anregungslichts 3 in die Faser 40, 49 zur Anregung der Probe 9 einkoppelt. Die Einzelfaser 40 überträgt in dieser Ausführungsform als Einkoppel-Faser 49 sowohl das Anregungslicht 3 als auch - zeitlich versetzt - das Raman-Licht 10, welches von der Probe 9 nach Anregung durch das Anregungslicht 3 ausgesandt wird. Das Raman-Licht 10 wird auf den Strahlenteiler 1 geleitet, wobei abermals ein Teil des Raman-Lichts 10 durch den Strahlenteiler 1 hindurchtritt und auf eine Auskoppelfaser 55 geleitet wird. Die Auskoppelfaser 55 führt das Raman-Licht 10 zum Detektor 14 (siehe Fig. 1).

Statt der in Fig. 5 eingesetzten Einzelfaser 40, die sowohl für die Anregung als auch zur Detektion eingesetzt wird in Kombination mit einem Strahlenteiler 1 (halbdurchlässiger Spiegel 1), kann auch eine beispielsweise mit Fig. 6 gezeigte 7-Fasersonde 43 verwendet werden. Der Aufbau 30, der in Fig. 6 teilweise gezeigt ist, eignet sich insbesondere für stark streuende Medien 9. Die optischen Wege für Anregung und Detektion überschneiden sich hier nur teilweise. Es ist dem Fachmann klar, dass die gezeigten Verbesserungen bspw. Mit Einzelfaser 40 oder 7-Fasersonde 43 auch in Kombination mit der optischen Grenzfläche 4 einsetzbar sind und insbesondere die Ausführungsformen 4a bis 4h der optischen Grenzfläche sinnvoll mit der 7-Fasersonde 43 kombinierbar sind, um ein optimales Signal-zu-Rausch-Verhältnis des Raman-Lichts 10 zu erhalten.

Bezug nehmend auf Fig. 6 ist die 7-Fasersonde 43 mit baulichen Details gezeigt, wie sie in einer Ausführungsform realisiert werden kann. Eine Anregungs-Licht-Faser 43a führt das Licht von der Lichtquelle 2 zu dem Objekt 9, sechs Raman-Licht-Fasern 43b führen das Raman-Licht 10 zum Detektor. Eine Nitinol-Kanüle 45 weist eine erste 45a und eine zweite Klebestelle 45b auf. Ggf. ist auch eine dritte Klebestelle 45c vorhanden zur Verlängerung der Nitinol-Kanüle 45. An der zweiten Klebestelle 45b ist ein Verteiler 46 angeordnet, der die 7 Einzelfasern der 7-Fasersonde 43 auf die Zweige Anregung 47 und Detektion 48 aufteilen. Die Enden des Anregungs- bzw. Detektionszweigs 47, 48 sind in dieser Ausführungsform mit SMA-Kupplungen versehen.

Eine weitere vielversprechende Ausführungsform wird mit Fig. 7 mit der Integration einer Weitapertur-Sonde gezeigt. Diese ermöglicht eine signifikante Steigerung der Ausbeute an Ramansignal, indem der Raumwinkel zum Einfangen des Lichtes erhöht wird. Hierfür werden Fresnellinsen 6b eingesetzt, die eine hohe numerische Apertur bei vergleichsweise kleiner Brennweite aufweisen. Die Fresnellinsen erlauben dabei im Unterschied zu sphärischen, plankonvexen Linsen mit hoher numerischer Apertur auch kleinere Brennweiten, wodurch die Baulänge der Sonde auf ein praktikables Maß verkleinert werden kann. Fig. 7 verdeutlicht anhand des entsprechenden Strahlenganges einen Vergleich des optischen Aufbaus 30 mit plankonvexen Linsen mit einem Aufbau 30 mit vorgeschalteter Fresnellinse.

Fig. 7 verdeutlicht dies dabei in Form einer optischen Raytracing-Simulation, wie bei vorgeschalteter Fresnellinse signifikant mehr Licht eingefangen und zur Nachweisseite geführt werden kann. Die Auswertung der Simulation zeigt eine ca. dreifache Steigerung der Sammeleffizienz. Die gezeigte Nachweiseinheit enthält einen Notch-Filter mit hoher Dämpfung in einem schmalen Wellenlängenbereich, der dem Detektor vorgeschaltet ist und die Anregungswellenlänge blockiert. Danach folgt ein weiterer Filter (Bandpassinterferenzfilter), welcher die in Vorversuchen genau definierte nachzuweisende Wellenlänge transmittiert.

Die benötigten Bandpassfilter sind in der benötigten Leistungsklasse (schmale Bandbreite bei hohem Transmissionsgrad im Messbereich und extrem niedrigem Transmissionsgrad im Sperrbereich) derzeit nicht für jede beliebige Wellenlänge am Markt verfügbar. Um dennoch bei der für die Ramanmessung nötigen Messwellenlänge detektieren zu können und so gerade in der Versuchsphase flexibel hinsichtlich der Stoffsysteme bleiben zu können, wird der Umstand ausgenutzt, dass der transmittierte Wellenlängenbereich vom Einfallswinkel des Lichts auf den Interferenzfilter abhängig ist.

Hinsichtlich der einzusetzenden Detektoren 14 ist im Rahmen der Erfindung aufgefallen, dass Photomultiplier beispielsweise im Vergleich zu Avalanche-Dioden ein niedrigeres Dunkelrauschen aufweisen. Vorteilhaft an den Avalanche-Dioden ist demgegenüber eine hohe Nachweisempfindlichkeit im roten und nahinfraroten Spektralbereich bis hin zu 1500 nm mittels Indium-Gallium-Arsenid (InGaAs) Avalanche-Dioden.

Die hohe Dunkelpulsrate, die für das Dunkelrauschen verantwortlich ist, kann über den Einsatz gepulster Lichtquellen ausgeglichen bzw. vermindert werden. Die Dunkelpulsrate liegt bei üblichen, mäßig gekühlten und mit vertretbaren Kosten aufgebauten Systemen in einer Größenordnung von 300 counts pro Sekunde. Wird der Laser z.B. mit 1 ms gepulst und für weitere 99 ms ausgeschaltet und erfolgt die Datenerfassung nur in dieser "hellen" Millisekunde, so reduziert sich das Dunkelrauschen des Detektors um einen Faktor von 100 auf ca. 3 counts pro Sekunde. Auch die Nachweisgrenze wird dabei reduziert. Die maximale Zählrate (Messbereichsobergrenze) wird bei ca. 10 Mio Pulsen pro Sekunde liegen. Ein weiterer Intensitätsvorteil kommt durch die zu erreichende Geometrie zustande. Die Nachweisfläche einer Wellenlänge in den bisher üblichen Spektrometern ist durch die Aufspaltung aller nachgewiesenen Wellenlängen über einen Gitter-Spektralapparat definiert. Der Eingangsschlitz des Spektrometers wird letztendlich auf Pixel einer Größe von etwa 25µm bis max. 2000µm abgebildet, beispielsweise weisen die Pixel eine Größe von 25µm auf 2000µm auf. Diese Fläche ist somit die Detektionsfläche.

Das Photometer wirkt im Unterschied zum Spektrometer mit dispersivem Element als Interferometer. Das Interferometer besteht aus einem großflächigen Filter, welcher selektiv für die gewünschte Wellenlänge durchlässig ist. Die Größe der lichtempfindlichen Fläche der Avalanche-Diode liegt beispielsweise bei (1 x 1)mm2. Die Detektionsfläche kann daher im Vergleich zu einem Spektrometer um das 20-fache erhöht werden. Es hat sich als vorteilhaft erwiesen, den Lichtgewinn auf eine Reduzierung der Laserleistung einerseits und eine erhöhte Nachweisempfindlichkeit von Molekülen andererseits aufzuteilen. Durch die erhöhte flächenbezogene Nachweisempfindlichkeit durch Einzelphotonennachweis verbessert sich dieser etwa um einen Faktor 5 gegenüber CCD-Sensoren.

Es hat sich im Rahmen der Erfindung gezeigt, dass sich in vielen Fällen für eine nachzuweisende Substanz eine scharfe Raman-Detektionsbande zum direkten Nachweis des Analyten sowie eine breitere Fluoreszenzbande erhalten lässt. Die Fluoreszenzbande tritt in der Regel gleichzeitig mit dem Ramanpeak auf und kann beispielsweise über einen breitbandigen Detektor erfasst werden. Damit kann beispielsweise über bis zu drei Wellenlängen eine eindeutige Zuordnung des Messsignals zur gesuchten Analytkonzentration erfolgen. Es hat sich dabei gezeigt, dass es ggf. ausreichend ist, wenn nur eine der Wellenlängen über eine Avalanche-Diode detektiert wird. Die zur Auswertung der Fluoreszenz verwendeten Messstellen bzw. Detektoren können breitbandig sein. Da so mehr Licht auf der Detektionsseite ankommt, können auch preiswerte, hochempfindliche PIN-Dioden als Detektoren eingesetzt werden. Eine mögliche Prinzipskizze zur Simultanmessung von Raman- und Fluoreszenzsignal ist in Fig. 8 gegeben. Ein Detektor 14 misst das Raman-Licht 10, welches durch die optische Grenzfläche 4 auf den Detektor 14 geleitet wird; Ein Sekundärer Detektor 16 misst das Fluoreszenzsignal 11, welches an der optischen Grenzfläche 4 von der Linse 6 vorbeigeleitet wird bzw., je nach Ausführungsform der optischen Grenzfläche 4, auf transmissive Bereiche 51 der optischen Grenzfläche trifft und die optische Grenzfläche 4 durchtritt.

Die Prozessanalysentechnik hat einen hohen Stellenwert in der chemischen Industrie. Sei es während des Prozesses zur Überwachung von kritischen Verfahrensschritten oder zur anschließenden Qualitätskontrolle. Einen besonderen Platz nehmen die optischen Messmethoden ein, da diese meist die Möglichkeit bieten online oder inline Prozessparameter zu überwachen. Bei komplexen Prozessen haben sich hauptsächlich Messverfahren im NIR- und MIR-Spektralbereich bewährt. Insbesondere im Mittel-Infraroten Spektralbereich können Aussagen über den Zustand des Prozesses und der Zusammensetzung der Reaktanden getroffen werden. Da Glasfasern Mittel-Infrarot-Strahlung absorbieren ist eine prozessnahe Aufstellung der Spektrometer von Nöten. Um dies zu umgehen, wird bevorzugt auf die NIR-Spektroskopie ausgewichen. In dem Nah-Infraroten-Spektralbereich ist der Informationsgehalt geringer, allerdings ist eine Verwendung von Glasfasern hier möglich.

Die Raman-Spektroskopie verbindet die Vorteile der MIR- und der NIR-Spektroskopie.

Bei fasergekoppelten Systemen wird ein Lichtwellenleiter an den Eintrittsspalt angeschlossen. Um die Effizienz und den Lichtdurchsatz zu erhöhen, kann ein Querschnittswandler oder eine Blende am Eintrittsspalt eingesetzt werden. Aus diesem tritt Strahlung z.B. in einer Kegelform aus. Die Öffnung des Kegels wird durch die numerische Apertur, dem Austrittswinkel, beschrieben.

Da Strahlengänge umkehrbar sind, entspricht der maximale Eintrittswinkel auch dem maximalen Austrittswinkel der elektromagnetischen Wellen aus einem Lichtwellenleiter. Die Strahlung trifft auf einen ersten Hohlspiegel - dieser kann durch eine optische Linse ersetzt werden - und wird reflektiert und parallelisiert. Die kollimierten Lichtstrahlen treffen auf ein Gitter, welches die Lichtstrahlen je nach Wellenlänge in einem unterschiedlichen Winkel beugt. Die in verschiedenen Wellenlängen gebeugten Lichtstrahlen treffen auf einen zweiten Spiegel. Dieser fokussiert die elektromagnetischen Wellen in einem Spektrometer auf einen Detektor oder in einem Monochromator auf einen Austrittsspalt. Durch ein Drehen des Gitters ist es möglich den gewünschten spektralen Bereich auf dem Detektor abzubilden.

Als optisches Gitter wird meist ein Blaze-Gitter verwendet. Die Oberfläche besteht aus treppenförmigen Furchen. An diesen werden die Strahlen je nach Wellenlängen unterschiedlich gebeugt. Dabei treten in benachbarten Treppenstufen Elementarwellen auf, welche einen Gangunterschied mit einem ganzzahligen Vielfachen der Wellenlänge haben, was zu einer positiven Interferenz führt. Theta_e beschreibt den Eintrittswinkel zu der Normalen auf dem Substrat, Theta den Austrittswinkel. Alpha gibt den Unterschied von der Normalen auf dem Substrat und der Normalen auf den Furchen an, G bzw. B die Breite der Furchen. Durch die Struktur des Blaze-Gitters wird erreicht, dass der größte Anteil der Strahlung in 1. Ordnung gebrochen wird. Die 0. Ordnung stellt den direkten Reflex ohne eine spektrale Aufspaltung der Strahlung dar und kann daher nicht genutzt werden. Ab der Reflexion 1. Ordnung wird die Strahlung spektral aufgespalten.

In einem beispielhaften Aufbau 30 wird das Raman-Signal mit einem Laser bei 785 nm angeregt. In dem Referenz-Spektrometer ist eine Si-CCD-Zeile, Silizium Charge Coupled Device, als Detektor im Einsatz. Eine CCD-Zeile ist ein Halbleiter, welcher meist aus Silizium besteht. Silizium-CCD-Zeilen haben ihre maximale Empfindlichkeit bei ca. 600 nm und können bis ca. 1100 nm eingesetzt werden. Die Zeile besteht aus mehreren aufeinanderfolgenden Pixeln. Jeder Pixel weißt einen Übergang zwischen einem n- und einem p-dotierten Halbleiter auf. Durch einen Eintrag von Photonen auf einen Pixel werden Elektronen von dem Valenz- in das Leitungsband angehoben. Dies sorgt für einen Stromfluss zwischen den n- und p-dotierten Halbleitern. Der Stromfluss ist proportional zu der Intensität der einfallenden elektromagnetischen Strahlung. Da ein CCD-Detektor aus vielen Pixeln besteht, können mehrere Wellenlängen gleichzeitig detektiert werden.

Es können Spektro-Photometer eingesetzt werden, da diese die Vorteile eines Spektrometers (die Aufnahme eines kompletten Spektrums) mit den Vorteilen eines Photometers (höhere Nachweisempfindlichkeit) kombinieren. Spektro-Photometer verwenden fast ausschließlich Prismen zur Spaltung der elektromagnetischen Strahlung, dieses fungiert mit einer Blende als Monochromator. In der industriellen Anwendung können auch ein oder mehrere optische Filter das Prisma ersetzen. Der Austausch des Prismas hat den Vorteil, dass keine beweglichen Teile für den Bau eines Photometers benötigt werden. Dies sorgt für eine deutlich erhöhte Robustheit der Geräte, da diese nicht mehr anfällig auf Vibrationen reagieren. Ein weiterer Vorteil liegt in der Möglichkeit ein Photometer deutlich kleiner entwerfen zu können.

Der Aufbau bei einem Photometer mit optischen Filtern besteht beispielsweise aus einer Lichtquelle, zwei Linsen zum Parallelisieren und anschließenden Fokussieren auf einen Detektor sowie dem optischen Filter. Im Gegensatz zu einem UV-/VIS-Photometer ist bei einem Raman-Photometer keine breitbandige Lichtquelle im Einsatz, sondern eine monochromatische Lichtquelle wie insbesondere ein Laser. Weiterhin wird nicht die Absorption gemessen, sondern die Raman-Streuung. Aus diesem Grund ist es vorteilhaft, bei einem Raman-Photometer den Bandpass-Filter zwischen der Probe und dem Detektor zu verbauen - im Gegensatz zu einem UV-/VIS-Photometer, wo dieser vor der Probe zu finden ist.

Um die Raman-Signale zu messen wird ein hochsensitiver Detektor benötigt. Dies kann mit einer Avalanche-Diode erfolgen. Eine Avalanche-Diode besteht aus mehreren Halbleiterschichten an denen eine Spannung, die sogenannte Beschleunigungsspannung, anliegt. Das eintreffende Photon gelangt durch die erste p-dotierte Halbleiterschicht auf die intrinsische Schicht und erzeugt dort ein Elektronen-Loch-Paar. Durch eine anliegende Beschleunigungsspannung wird das Paar getrennt und zur Anode bzw. Kathode beschleunigt. Wenn die angelegte Spannung hinreichend groß ist, können die Elektronen in der nachfolgenden p-dotierten Halbleiterschicht durch Zusammenstöße weitere Elektronen-Loch-Paare erzeugen. Es entsteht der sogenannte Lawinendurchbruch. Die hierdurch ausgelöste Lawine ist proportional zu den Photonen, welche auf den Detektor auftreffen und kann über eine externe Zähleinheit detektiert werden. Avalanche-Dioden sind von der Bauform sehr robust und gegen äußere Einflüsse relativ stabil. Eine weitere Anwendung von Avalanche-Dioden sind Multi-Pixel Photon Counter (MPPC). Diese bieten als zusätzlichen Vorteil die Möglichkeit die aktive Fläche im Vergleich zu einzelnen Avalanche-Dioden deutlich zu vergrößern. Des Weiteren gehören Avalanche-Dioden neben den Photomultipliern zu den lichtempfindlichsten Detektoren und sind für den Einzelphotonennachweis geeignet. Auch der Einsatz von Photomultipliern oder PIN-Photodioden ist möglich.

Im Folgenden wird ein einfacher Aufbau eines mit der Erfindung verwendbaren Raman-Photometers 30 erläutert, wie er mit Fig. 9 gezeigt ist.

Für den optischen Aufbau des Raman-Photometers 30 wurde als bevorzugte Weiterbildung ein Modulares System entwickelt, um eine möglichst große Flexibilität bei einer Veränderung der Anforderungen zu gewährleisten.

Der Messsignaleingang kann beispielsweise durch einen SMA-Anschluss am Photometer realisiert und der Lichtstrahl mittels einer Plankonvex-Linse kollimiert werden. Das Licht trifft nun auf den durchstimmbaren Bandpassfilter, welcher die gewünschten Wellenlängen herausfiltert. Der Vorteil dieser, im Vergleich zu herkömmlichen Bandpassfiltern, liegt in der Möglichkeit diese bis zu 60 Grad im Verhältnis zur optischen Achse anstellen zu können, ohne einen nennenswerten Transmissionsverlust in Kauf nehmen zu müssen. Die hier verwendeten Bandpassfilter sind zwischen ca. 760 nm und 900 nm, d.h. einem Raman-Shift von 0 bis ca. 1630 1/cm, durchstimmbar. Nach den Bandpassfiltern trifft das Messsignal auf einen Strahlenteiler. Dieser teilt die Strahlung zwischen 700 und 1100 nm im Verhältnis 50 : 50. Dieser dient dazu die Messergebnisse der Avalanche-Dioden mit einem Referenz-Raman-Spektrometer vergleichen und kontrollieren zu können. In einem Aufbau 30 kann dieser vor den Bandpassfiltern angebracht werden, um eine simultane Fluoreszenz-Messung durchführen zu können. Abschließend wird das Messsignal jeweils auf einen SMA-Anschluss für eine Avalanche-Diode und dem Referenz-Spektrometer fokussiert, wobei eine Plankonvex-Linse eingesetzt werden kann.

Mit anderen Worten ist Bezug nehmend auf Fig. 9 ein Aufbau 30 gezeigt mit einem Eingang 37, durch welchen Raman-Licht 10 entweder von einem Sondenkopf 34 oder von der Probe 9 eintritt. Im Strahlengang nach dem Eingang 37 ist eine Linse 6 angeordnet, sowie zwei Filter 18, in diesem Beispiel durchstimmbare Filter 18. An die durchstimmbaren Filter 18 schließt sich eine optische Grenzfläche 4 an, welche das Raman-Licht - fokussiert durch je eine Linse 6 - zu einem jeweiligen Ausgang Avalanche-Diode bzw. Ausgang Referenz führt.

Hervorzuheben in dieser mit Fig. 9 gezeigten Ausführungsform der Raman-Photometer-Konstruktion ist die Verwendung von Avalanche-Photodioden als Detektoren.

Um störende Reflexe beispielsweise von glänzendem Aluminium zu verringern, ist es eine Möglichkeit, die Oberfläche mit einem mattschwarzen Lack und/oder Kohlestaub zu behandeln. Auf die angeraute Aluminium-Oberfläche kann der mattschwarze Lack direkt aufgesprüht werden. Im noch nassen Zustand wird anschließend beispielsweise die zu Staub bzw. feinen Partikelgrößen zermahlene Holzkohle auf die Farbe aufgebracht. Hierbei entsteht eine raue Oberfläche. Die raue Oberfläche kann das Licht diffus streuen. Diffus gestreutes Licht wird in alle Richtungen gestreut, so dass nur noch ein geringerer Anteil in den Detektor gelangt, weshalb es nur von geringerer Intensität ist.

Bezug nehmend auf Fig. 10 ist schließlich eine bereits realisierte Ausführung gezeigt, die auf der Ausführungsform der Fig. 9 basiert und die ein Vorserienmodell als fertiges Gerät zur Durchführung der Erfindung zeigt. Gleiche Gegenstände sind mit gleichen Bezugszeichen beschriftet.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen.

In allen Figuren stellen gleiche Bezugszeichen gleiche Gegenstände dar, so dass Beschreibungen von Gegenständen, die ggf. nur in einer oder jedenfalls nicht hinsichtlich aller Figuren erwähnt sind, auch auf diese Figuren übertragen werden können, hinsichtlich welchen der Gegenstand in der Beschreibung nicht explizit beschrieben ist.

### Bezugszeichenliste:

- 2: Lichtquelle, Laser
- 3: Anregungslicht, Laserlicht, dünner Strahl des Anregungslichts
- 4: Optische Grenzfläche bzw. Spiegelanordnung oder Glasscheibe
- 4a bis 4h: Ausführungsbeispiele einer optischen Grenzfläche 4
- 5: reflexiver Teilbereich der optischen Grenzfläche
- 6: Linse
- 6a: Linse
- 6b: Fresnellinse
- 7: Streu-Ort bzw. Ereignisort
- 8: optisch transparente Fläche bzw. Scheibe
- 9: Prozessraum bzw. Produkt als Prozessraum f.d. Raman-Streuung
- 9a: Brennpunkt
- 10: Raman-Licht
- 11: Fluoreszenz-Licht
- 12: Sammellinse
- 13: Nachweisort
- 14: Detektor
- 14a: Spiegel
- 14b: Detektor
- 15a: Anordnung, Photodiode zur Verschmutzungsdetektion
- 15b: Strahlfänger oder Lichtfalle
- 16: Sekundärer Detektor
- 18: Filter
- 30: Sensorsystem bzw. Aufbau
- 32: Lichtwellenleiter bzw. elastische Streuung
- 33: Glasfaser- oder Kunststofffaser-Anordnung
- 34: Sondenkopf
- 35: Faser
- 36: Sondenkopfgehäuse
- 37: Eingang
- 40: Einzelfaser
- 41: erste Seite der optischen Grenzfläche
- 42: zweite Seite der optischen Grenzfläche
- 43: Mehr-Fasersonde bzw. Glasfaser-Bündelleitung
- 43a: Anregungs-Licht-Faser
- 43b: Einzelfaser der Mehr-Fasersonde, Raman-Licht-Faser
- 45a: erste Klebestelle
- 45b: zweite Klebestelle
- 45c: dritte Klebestelle
- 45: Nitinol-Kanüle
- 46: Verteiler
- 47: Anregungszweig
- 48: Detektionszweig
- 49: Einkoppelfaser
- 51: transmissiver Teilbereich der optischen Grenzfläche
- 52: weiterer reflektiver Bereich der optischen Grenzfläche
- 55: Auskoppelfaser
- 61: Bohrloch
- 62: Bohrloch

## Patentansprüche

1. Ramanmesssystem (30), hergerichtet für eine niedrige Lichtleistung (3), umfassend:
eine Lichtquelle (2) zur Bereitstellung kohärenten unfokussierten Lichts als Anregungslicht für eine aus einer Probe (9) rückgestreuten Raman-Streustrahlung (10),
einen Raman-Detektor (14) zur Erfassung der Intensität einer aus einer Probe (9) rückgestreuten Raman-Streustrahlung (10),
eine optische Grenzfläche (1, 4), wobei die optische Grenzfläche teildurchlässig ist oder wobei die optische Grenzfläche einen reflexiven Bereich (5) und einen transmissiven Bereich (51) aufweist,
wobei die optische Grenzfläche derart hergerichtet und angeordnet ist, das kohärente, unfokussierte Licht der Lichtquelle auf einer ersten Seite (41) der optischen Grenzfläche zu empfangen und im weiteren Strahlverlauf von der optischen Grenzfläche auf die Probe zur Erzeugung der Streustrahlung zu richten, und ferner dazu, die Raman-Streustrahlung auf derselben Seite der optischen Grenzfläche zu empfangen und im weiteren Strahlverlauf zu dem Detektor (14) zu leiten,
wobei die Lichtquelle (2) zur Bereitstellung kohärenten unfokussierten Lichts eine Ausgangsleistung von weniger als 35 mW aufweist, und
ferner umfassend eine Weitaperturaufnahme mit wenigstens einer Fresnellinse (6b) zur Vergrößerung des Aufnahmewinkels des Ramanmesssystems (30) für die Raman-Streustrahlung (10).

2. Ramanmesssystem (30) nach vorstehendem Anspruch,
**gekennzeichnet dadurch, dass** die Lichtquelle (2) zur Bereitstellung kohärenten Lichts eine Ausgangsleistung von weniger als 7 mW und insbesondere weniger als 3 mW aufweist.

3. Ramanmesssystem (30) nach einem der vorstehenden Ansprüche,
ferner umfassend einen Sondenkopf (34), wobei die optische Grenzfläche (1, 4) in dem Sondenkopf angeordnet ist.

4. Ramanmesssystem (30) nach einem der vorstehenden Ansprüche,
wobei die optische Grenzfläche (1, 4) derart teildurchlässig ist, dass für aus der Probe (9) rückgestreute Raman-Streustrahlung (10) ein erster Teilbereich (5) der optischen Grenzfläche im Wesentlichen lichtundurchlässig und ein zweiter Teilbereich (51) der optischen Grenzfläche im Wesentlichen lichtdurchlässig ist, wobei insbesondere der erste Teilbereich zentrisch angeordnet ist und der zweite Teilbereich konzentrisch um den ersten Teilbereich herum angeordnet ist.

5. Ramanmesssystem (30) nach einem der vorstehenden Ansprüche,
wobei das kohärente Licht (3) der Lichtquelle (2) von der Lichtquelle zunächst auf eine erste, der Probe (9) zugewandten Seite (41) der optischen Grenzfläche (1, 4) gerichtet wird und von der optischen Grenzfläche in Richtung der Probe geleitet wird,
wobei die Streustrahlung (10) auf die erste, der Probe zugewandten Seite der optischen Grenzfläche trifft und die optische Grenzfläche von der ersten Seite auf eine zweite Seite (42) hin durchdringt.

6. Ramanmesssystem (30) nach den Ansprüchen 4 und 5,
wobei das kohärente Licht (3) der Lichtquelle (2) auf den ersten Teilbereich (41) der optischen Grenzfläche (1, 4) gerichtet ist und wobei der erste Teilbereich reflektiv bzw. im Wesentlichen reflektiv ist, so dass das kohärente Licht der Lichtquelle von der optischen Grenzfläche abgelenkt wird, und
wobei die von der Probe (9) kommende Raman-Streustrahlung (10) im Wesentlichen auf den zweiten Teilbereich (51) der optischen Grenzfläche gerichtet ist und wobei der zweite Teilbereich transmissiv bzw. im Wesentlichen lichtdurchlässig ist, so dass die Streustrahlung die optische Grenzfläche durchtritt.

7. Ramanmesssystem (30) nach einem der vorstehenden Ansprüche,
ferner umfassend eine Mehr-Fasersonde (43) mit zumindest einer Anregungs-Lichtfaser (43a) und einer Raman-Lichtfaser (43b), so dass das Anregungs-Licht (3) getrennt von dem Raman-Licht (10) zur Probe (9) geleitet wird.

8. Ramanmesssystem (30) nach einem der vorstehenden Ansprüche,
ferner mit zumindest einer zwischen der Probe und der optischen Grenzfläche (1, 4) angeordneten optisch transparenten Fläche (8) zur Dämpfung von Streustrahlung, wobei die optisch transparente Fläche eine Scheibe, eine Planscheibe oder eine Glasscheibe umfasst.

9. Ramanmesssystem (30) nach einem der vorstehenden Ansprüche,
ferner mit zumindest einer an einer von der Probe abgewandten Seite angeordneten zweiten optisch transparenten Fläche (8) und einem hinter der zweiten optisch transparenten Fläche angeordneten Sammel-Spiegel (14a) zur Erhöhung der Lichtausbeute der Raman-Streustrahlung (10).

10. Ramanmesssystem (30) nach dem vorstehenden Anspruch,
ferner mit einem Strahlfänger (15) zum Auffangen des insbesondere achsenparallelen Anregungs-Lichts (3).

11. Ramanmesssystem (30) nach einem der Ansprüche 3 bis 10,
wobei das kohärente Licht der Lichtquelle (2) im Freistrahl auf die optische Grenzfläche (1, 4) trifft.

12. Ramanmesssystem (30) nach einem der vorstehenden Ansprüche,
ferner umfassend eine Linsenanordnung (6, 6a, 6b), wobei die Linsenanordnung teilweise oder bereichsweise frei von lichtbrechenden Eigenschaften ist zum Durchlass des monochromatischen Lichts (3) der Lichtquelle (2).

13. Ramanmesssystem (30) nach dem vorstehenden Anspruch, wobei die Linsenanordnung (6, 6a, 6 b) ein Bohrloch (61, 62) aufweist zum Durchlass des monochromatischen Lichts (3) der Lichtquelle (2).

14. Ramanmesssystem (30) mit einem Sondenkopf (34) nach einem der Ansprüche 3 bis 13, wobei der Sondenkopf (34) ferner eine Linsenanordnung (6, 6a, 6b) umfasst, wobei die Linsenanordnung teilweise oder bereichsweise frei von lichtbrechenden Eigenschaften ist zum Durchlass des monochromatischen Lichts (3) der Lichtquelle (2).

15. Ramanmesssystem (30) mit einem Sondenkopf (34) nach dem vorstehenden Anspruch, wobei die Linsenanordnung (6, 6a, 6b) ein Bohrloch (61, 62) aufweist zum Durchlass des monochromatischen Lichts (3) der Lichtquelle (2).

16. Ramanmesssystem (30) mit einem Sondenkopf (34) nach einem der Ansprüche 3 bis 15, wobei der Sondenkopf (34) ferner einen durchstimmbaren Filter (18) im Strahlengang nach der optischen Grenzfläche (1, 4) und vor dem Detektor (14) umfasst.

17. Ramanmesssystem (30) mit einem Sondenkopf (34) nach einem der Ansprüche 3 bis 16, wobei der Sondenkopf (34) ferner ein Sondenkopfgehäuse (36) hergerichtet zur lichtdichten Beherbergung der Komponenten des Sondenkopfes und zur manuellen Ausrichtung des Sondenkopfes in Relation zur Probe (9) und/oder zum Detektor (14) umfasst.

## Claims

1. Raman measurement system (30) adapted for low light intensity (3), comprising:
a light source (2) for providing coherent unfocused light as excitation light for Raman scattered radiation (10) backscattered from a sample (9),
a Raman detector (14) for detecting the intensity of Raman scattered radiation (10) backscattered from a sample (9)
an optical interface (1, 4), wherein the optical interface is partially transparent or wherein the optical interface has a reflective area (5) and a transmissive area (51),
wherein the optical interface is adapted and arranged to receive the coherent, unfocused light from the light source on a first side (41) of the optical interface and to direct it in the further beam path from the optical interface onto the sample to generate the scattered radiation, and further to receive the Raman scattered radiation on the same side of the optical interface and then to guide it to the detector (14) in the further path of the beam,
wherein the light source (2) for providing coherent unfocused light has an output power of less than 35 mW, and,
further comprising a wide-aperture pick-up with at least one Fresnel lens (6b) for enlarging the pick-up angle of the Raman measurement system (30) for the Raman scattered radiation (10).

2. Raman measuring system (30) according to the preceding claim, **characterised in that** the light source (2) for providing coherent light has an output power of less than 7 mW and, in particular, less than 3 mW.

3. Raman measuring system (30) according to any of the preceding claims, further comprising a probe head (34), wherein the optical interface (1, 4) is arranged in the probe head.

4. Raman measuring system (30) according to any of the preceding claims, wherein the optical interface (1, 4) is partially transparent in such a way that, for Raman scattered radiation (10) backscattered from the sample (9), a first sub-region (5) of the optical interface is substantially opaque, and a second sub-region (51) of the optical interface is substantially transparent, wherein, in particular, the first sub-region is arranged centrally, and the second sub-region is arranged concentrically around the first partial region.

5. Raman measuring system (30) according to any of the preceding claims,
wherein the coherent light (3) of the light source (2) is initially directed from the light source onto a first side (41) of the optical interface (1, 4) facing the sample (9), and is guided from the optical interface in the direction of the sample,
wherein the scattered radiation (10) strikes the first side of the optical interface facing the sample and penetrates the optical interface from the first side to a second side (42).

6. Raman measuring system (30) according to claims 4 and 5,
wherein the coherent light (3) of the light source (2) is directed towards the first sub-region (41) of the optical interface (1, 4), and wherein the first sub-region is reflective or substantially reflective, so that the coherent light of the light source is deflected from the optical interface, and
wherein the Raman scattered radiation (10) coming from the sample (9) is directed substantially towards the second sub-region (51) of the optical interface and, wherein, the second sub-region is transmissive or substantially transparent, so that the scattered radiation passes through the optical interface.

7. Raman measuring system (30) according to any of the preceding claims, further comprising a multi-fibre probe (43) with at least one excitation light fibre (43a) and one Raman light fibre (43b), so that the excitation light (3) is guided to the sample (9) separately from the Raman light (10).

8. Raman measuring system (30) according to any of the preceding claims, further comprising at least one optically transparent surface (8) arranged between the sample and the optical interface (1, 4) for attenuating scattered radiation, wherein the optically transparent surface comprises a disc, a face plate or a glass pane.

9. Raman measuring system (30) according to any of the preceding claims, further comprising at least one second optically transparent surface (8) arranged on a side facing away from the sample and a collecting mirror (14a) arranged behind the second optically transparent surface for increasing the light yield of the Raman scattered radiation (10).

10. Raman measuring system (30) according to the preceding claim, furthermore, with a beam catcher (15) for catching the excitation light (3), which is parallel to the axis in particular.

11. Raman measurement system (30) according to any one of claims 3 to 10, wherein the coherent light from the light source (2) strikes the optical interface (1, 4) as a free beam.

12. Raman measuring system (30) according to any of the preceding claims, further comprising a lens arrangement (6, 6a, 6b), wherein the lens arrangement is partially or regionally free of refractive properties for transmitting the monochromatic light (3) from the light source (2).

13. Raman measuring system (30) according to the preceding claim, wherein the lens arrangement (6, 6a, 6b) comprises a drilled hole (61, 62) for passing the monochromatic light (3) of the light source (2).

14. A Raman measurement system (30) comprising a probe head (34) according to any one of claims 3 to 13, wherein the probe head (34) further comprises a lens arrangement (6, 6a, 6b), wherein the lens arrangement is partially or regionally free of refractive properties for transmitting the monochromatic light (3) from the light source (2).

15. Raman measuring system (30) with a probe head (34) according to the preceding claim, wherein the lens arrangement (6, 6a, 6b) has a borehole (61, 62) for the passage of the monochromatic light (3) of the light source (2).

16. A Raman measurement system (30) comprising a probe head (34) according to any one of claims 3 to 15, wherein the probe head (34) further comprises a variable filter (18) in the beam path after the optical interface (1, 4) and before the detector (14).

17. A Raman measurement system (30) comprising a probe head (34) according to any one of claims 3 to 16, wherein the probe head (34) further comprises a light-tight probe head housing (36) adapted to hold the components of the probe head, and to manually align the probe head in relation to the sample (9) and/or the detector (14).

## Revendications

1. Système de mesure Raman (30), configuré pour une faible puissance lumineuse (3), comprenant :
une source lumineuse (2) pour fournir une lumière cohérente non focalisée comme lumière d'excitation pour un rayonnement diffus Raman (10) rétrodiffusé à partir d'un échantillon (9),
un détecteur Raman (14) pour détecter l'intensité d'un rayonnement diffus Raman (10) rétrodiffusé à partir d'un échantillon (9),
une surface limite optique (1, 4), dans lequel la surface limite optique est en partie perméable ou dans lequel la surface limite optique présente une zone (5) réfléchissante et une zone (51) transmissive,
dans lequel la surface limite optique est configurée et disposée de manière à recevoir la lumière non focalisée cohérente de la source lumineuse sur un premier côté (41) de la surface limite optique et à l'orienter dans la suite du faisceau depuis la surface limite optique vers l'échantillon pour générer le rayonnement diffus, et en outre à recevoir le rayonnement diffus Raman sur le même côté de la surface limite optique et à l'orienter dans la suite du faisceau vers le détecteur (14),
dans lequel la source lumineuse (2) présente une puissance de sortie inférieure à 35 mW pour fournir une lumière non focalisée cohérente, et
comprenant en outre une réception à large ouverture avec au moins une lentille de Fresnel (6b) pour augmenter l'angle de réception du système de mesure Raman (30) pour le rayonnement diffus Raman (10).

2. Système de mesure Raman (30) selon la revendication précédente,
**caractérisé en ce que** la source lumineuse (2) pour fournir une lumière cohérente présente une puissance de sortie inférieure à 7 mW et en particulier inférieure à 3 mW.

3. Système de mesure Raman (30) selon l'une quelconque des revendications précédentes,
comprenant en outre une tête de sonde (34), dans lequel la surface limite optique (1, 4) est disposée dans la tête de sonde.

4. Système de mesure Raman (30) selon l'une quelconque des revendications précédentes,
dans lequel la surface limite optique (1, 4) est en partie perméable de telle manière qu'une première sous-zone (5) de la surface limite optique est sensiblement étanche à la lumière et une deuxième sous-zone (51) de la surface limite optique est sensiblement perméable à la lumière pour le rayonnement diffus Raman (10) rétrodiffusé à partir de l'échantillon (9), dans lequel en particulier la première sous-zone est disposée de manière centrée et la deuxième sous-zone est disposée de manière concentrique autour de la première sous-zone.

5. Système de mesure Raman (30) selon l'une quelconque des revendications précédentes,
dans lequel la lumière cohérente (3) de la source lumineuse (2) est d'abord dirigée depuis la source lumineuse vers un premier côté (41) de la surface limite optique (1, 4) orienté vers l'échantillon (9) et est ensuite guidée par la surface limite optique en direction de l'échantillon,
dans lequel le rayonnement diffus (10) atteint le premier côté de la surface limite optique tourné vers l'échantillon et traverse la surface limite optique du premier côté vers un deuxième côté (42).

6. Système de mesure Raman (30) selon les revendications 4 et 5,
dans lequel la lumière cohérente (3) de la source lumineuse (2) est dirigée sur la première sous-zone (41) de la surface limite optique (1, 4) et dans lequel la première sous-zone est réfléchissante ou sensiblement réfléchissante de telle sorte que la lumière cohérente de la source lumineuse est déviée de la surface limite optique, et
dans lequel le rayonnement diffus Raman (10) provenant de l'échantillon (9) est sensiblement dirigé sur la deuxième sous-zone (51) de la surface limite optique et dans lequel la deuxième sous-zone est transmissive ou sensiblement perméable à la lumière de telle sorte que le rayonnement diffus traverse la surface limite optique.

7. Système de mesure Raman (30) selon l'une quelconque des revendications précédentes,
comprenant en outre une sonde multifibre (43) avec au moins une fibre optique d'excitation (43a) et une fibre optique Raman (43b) de telle sorte que la lumière d'excitation (3) est dirigée séparément de la lumière Raman (10) vers l'échantillon (9).

8. Système de mesure Raman (30) selon l'une quelconque des revendications précédentes,
avec en outre au moins une surface optiquement transparente (8) disposée entre l'échantillon et la surface limite optique (1, 4) pour amortir le rayonnement diffus, dans lequel la surface optiquement transparente comprend une vitre, une vitre plane ou une vitre en verre.

9. Système de mesure Raman (30) selon l'une quelconque des revendications précédentes,
avec en outre au moins une deuxième surface optiquement transparente (8) disposée sur un côté opposé à l'échantillon et un miroir collecteur (14a) disposé derrière la deuxième surface optiquement transparente pour augmenter le rendement lumineux du rayonnement diffus Raman (10).

10. Système de mesure Raman (30) selon la revendication précédente,
avec en outre un piège à faisceau (15) pour capter la lumière d'excitation (3) en particulier parallèle à l'axe.

11. Système de mesure Raman (30) selon l'une quelconque des revendications 3 à 10,
dans lequel la lumière cohérente de la source lumineuse (2) rencontre la surface limite optique (1, 4) dans le faisceau libre.

12. Système de mesure Raman (30) selon l'une quelconque des revendications précédentes,
comprenant en outre un ensemble de lentilles (6, 6a, 6b), dans lequel l'ensemble de lentilles est en partie ou par endroits exempt de propriétés de réfraction de la lumière pour permettre le passage de la lumière monochromatique (3) de la source lumineuse (2).

13. Système de mesure Raman (30) selon la revendication précédente, dans lequel l'ensemble de lentilles (6, 6a, 6b) présente un trou (61, 62) pour le passage de la lumière monochromatique (3) de la source lumineuse (2).

14. Système de mesure Raman (30) avec une tête de sonde (34) selon l'une quelconque des revendications 3 à 13, dans lequel la tête de sonde (34) comprend en outre un ensemble de lentilles (6, 6a, 6b), dans lequel l'ensemble de lentilles est en partie ou par endroits exempt de propriétés de réfraction de la lumière pour permettre le passage de la lumière monochromatique (3) de la source lumineuse (2).

15. Système de mesure Raman (30) avec une tête de sonde (34) selon la revendication précédente, dans lequel l'ensemble de lentilles (6, 6a, 6b) présente un trou (61, 62) pour permettre le passage de la lumière monochromatique (3) provenant de la source lumineuse (2).

16. Système de mesure Raman (30) avec une tête de sonde (34) selon l'une quelconque des revendications 3 à 15, dans lequel la tête de sonde (34) comprend en outre un filtre ajustable (18) dans le trajet du faisceau après la surface limite optique (1, 4) et avant le détecteur (14).

17. Système de mesure Raman (30) avec une tête de sonde (34) selon l'une quelconque des revendications 3 à 16, dans lequel la tête de sonde (34) comprend en outre un boîtier de tête de sonde (36) mis au point pour loger de manière opaque les composants de la tête de sonde et pour aligner manuellement la tête de sonde par rapport à l'échantillon (9) et/ou au détecteur (14).
